# EUROPEAN PATENT APPLICATION

(11) **EP 4 642 088 A1**
(43) Date of publication of application: **29.10.2025**
(21) Application number: 22969026.8
(22) Date of filing: 23.12.2022
(51) Int. Cl.: H04W 24/10, H04B 7/06

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN)
(74) Representative: Aldridge, Henry Alexander
(86) International application number: PCT/CN2022/141619
(87) International publication number: WO 2024/130739

(57) **Abstract**

Provided in the embodiments of the present application are a wireless communication method and a device. A first communication device may input into a first network model power information of a reference signal portion and power information of an interference noise portion that are obtained by means of measurement, so as to perform prediction to obtain identification information of K spatial filters and/or L1-SINRs corresponding to the K spatial filters. That is, interference between beams (beam pairs) can be reflected in beam (pair) prediction based on an AI/ML model, thereby improving the performance of a beam management system.

## Description

### TECHNICAL FIELD

Embodiments of the disclosure relate to the field of communication, and in particular to a wireless communication method and a device.

### BACKGROUND

In the New Radio (NR) system, Artificial Intelligence (AI) or Machine Learning (ML) may be introduced to improve system performance. For example, AI/ML models are introduced to perform beam (pair) prediction, that is, the beam (pair) prediction is performed by trained AI/ML models, which improves performance of the beam management system. However, the current AI/ML model-based beam (pair) prediction can not reflect interference between beams (beam pairs). The network device often uses multiple beams (beam pairs) to cover different terminals during downlink transmission. How to reflect the interference between beams (beam pairs) in AI/ML model-based beam (pair) prediction is a problem that needs to be solved.

### SUMMARY

Embodiments of the disclosure provide a wireless communication method and a device. The first communication device may input the measured power information of the reference signal part and the measured power information of the interference noise part into the first network model, so as to predict the identifier information of K spatial filters and/or the Layer1 Signal to Interference plus Noise Ratios (L1-SINRs) corresponding to the K spatial filters. In other words, the interference between beams (beam pairs) may be reflected in AI/ML model-based beam (pair) prediction, thereby improving the performance of the beam management system.

In a first aspect, a wireless communication method is provided. The method includes the following operations.

A first communication device inputs a first measurement data set into a first network model, and outputs a first prediction data set.

Here, the first measurement data set includes at least one of: power information of a reference signal part measured based on a reference signal measurement set and power information of an interference noise part measured based on the reference signal measurement set, or identifier information of a spatial filter measured based on the reference signal measurement set. Or the first measurement data set includes at least one of: the power information of the reference signal part measured based on the reference signal measurement set and power information of the interference noise part measured based on an interference signal measurement set, the identifier information of the spatial filter measured based on the reference signal measurement set, or identifier information of the spatial filter measured based on the interference signal measurement set.

Here, the first prediction data set includes at least one of: identifier information of K spatial filters predicted from a reference signal prediction set, identifier information of K spatial filters predicted from an interference signal prediction set, or Predicted L1-SINRs corresponding to K spatial filters. Here, K is a positive integer.

In a second aspect, a communication device is provided. The communication device is configured to perform the method in the above first aspect.

Specifically, the communication device includes a functional module configured to perform the method in the above first aspect.

In a third aspect, a communication device is provided. The communication device includes a processor and a memory. The memory is configured to store a computer program, and the processor is configured to call and run the computer program stored in the memory, for enabling the communication device to perform the method in the above first aspect.

In a fourth aspect, an apparatus is provided. The apparatus is configured to implement the method in the above first aspect.

Specifically, the apparatus includes a processor configured to call and run a computer program in a memory, for enabling a device having installed thereon the apparatus to perform the method in the above first aspect.

In a fifth aspect, a computer-readable storage medium is provided. The computer-readable storage medium is configured to store a computer program that enables a computer to perform the method in the above first aspect.

In a sixth aspect, a computer program product is provided. The computer program product includes computer program instructions that enable a computer to perform the method in the above first aspect.

In a seventh aspect, a computer program is provided. The computer program, when run on a computer, enables the computer to perform the method in the above first aspect.

With the above technical solution, the first communication device may input the measured power information of the reference signal part and the measured power information of the interference noise part into the first network model, so as to predict the identifier information of K spatial filters and/or the L1-SINRs corresponding to the K spatial filters. In other words, the interference between beams (beam pairs) may be reflected in AI/ML model-based beam (pair) prediction, thereby improving the performance of the beam management system.

### BRIEF DESCRIPTION OF THE DRAWINGS

FIG. 1 is a schematic diagram of an architecture of a communication system to which an embodiment of the disclosure is applied.
FIG. 2 is a schematic diagram of connection of neurons in a neural network provided by the disclosure.
FIG. 3 is a schematic diagram of a structure of a neural network provided by the disclosure.
FIG. 4 is a schematic diagram of a convolutional neural network provided by the disclosure.
FIG. 5 is a schematic diagram of a structure of a Long Short-Term Memory (LSTM) unit provided by the disclosure.
FIG. 6 is a schematic diagram of a downlink beam sweeping process provided by the disclosure.
FIG. 7 is a schematic diagram of another downlink beam sweeping process provided by the disclosure.
FIG. 8 is a schematic diagram of yet another downlink beam sweeping process provided by the disclosure.
FIG. 9 is a schematic diagram of a spatial domain beam prediction model provided by the disclosure.
FIG. 10 is a schematic diagram of another spatial domain beam prediction model provided by the disclosure.
FIG. 11 is a schematic flowchart of a wireless communication method provided according to an embodiment of the disclosure.
FIGS. 12 to 17 are schematic diagrams of beam (pair) prediction models provided by embodiments of the disclosure.
FIG. 18 is a schematic block diagram of a communication device provided according to an embodiment of the disclosure.
FIG. 19 is a schematic block diagram of another communication device provided according to an embodiment of the disclosure.
FIG. 20 is a schematic block diagram of an apparatus provided according to an embodiment of the disclosure.
FIG. 21 is a schematic block diagram of a communication system provided according to an embodiment of the disclosure.

### DETAILED DESCRIPTION

The technical solution in the embodiments of the disclosure will be described below in combination with the drawings in the embodiments of the disclosure. It is apparent that the described embodiments are a part of the embodiments of the disclosure and not all of the embodiments. For the embodiments of the disclosure, all other embodiments obtained by those of ordinary skill in the art without making creative labor fall within the scope of protection of the disclosure.

The technical solution of the embodiments of the disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), a Wireless Local Area Network (WLAN), an internet of things (IoT), a Wireless Fidelity (WiFi), a 5th-Generation (5G) system, a 6th-Generation (6G) system, or other communication systems.

Generally, a conventional communication system support a limited number of connections and is easy to implement. However, with the development of the communication technology, a mobile communication system will not only support conventional communication, but also support, for example, Device to Device (D2D) communication, Machine to Machine (M2M) communication, Machine Type Communication (MTC), Vehicle to Vehicle (V2V) communication, sidelink (SL) communication, Vehicle to everything (V2X) communication, or the like. The embodiments of the disclosure may also be applied to these communication systems.

In some embodiments, the communication system in the embodiments of the disclosure may be applied to a Carrier Aggregation (CA) scenario, a Dual Connectivity (DC) scenario, a Standalone (SA) network deployment scenario, or a Non-Standalone (NSA) network deployment scenario.

In some embodiments, the communication system in the embodiments of the disclosure may be applied to an unlicensed spectrum. Here, the unlicensed spectrum may also be considered as a shared spectrum. Alternatively, the communication system in the embodiments of the disclosure may also be applied to a licensed spectrum. Here, the licensed spectrum may also be considered as an unshared spectrum.

In some embodiments, the communication system in the embodiments of the disclosure may be applied to the FR1 frequency band (corresponding to a frequency range of 410MHz to 7.125GHz) or the FR2 frequency band (corresponding to a frequency range of 24.25GHz to 52.6GHz), and may also be applied to a new frequency band, such as a high-frequency band corresponding to a frequency range of 52.6GHz to 71GHz or a frequency range of 71GHz to 114.25GHz.

The embodiments of the disclosure describe various embodiments in combination with a network device and a terminal device. Here, the terminal device may also be referred to as User Equipment (UE), an access terminal, a user unit, a user station, a mobile station, a remote station, a remote terminal, a mobile device, a user terminal, a terminal, a wireless communication device, a user agent, a user apparatus, or the like.

The terminal device may be a STATION (ST) in the WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing devices connected to a wireless modem, an in-vehicle device, a wearable device, a terminal device in a next generation communication system, such as a terminal device in an NR network, or a terminal device in a future evolved Public Land Mobile Network (PLMN), or the like.

In the embodiments of the disclosure, the terminal device may be deployed on land, including indoor or outdoor, hand-held, wearable or in-vehicle. The terminal device may also be deployed on water (such as a ship, or the like). The terminal device may also be deployed in the air (e.g. on an aircraft, a balloon, a satellite, or the like).

In the embodiments of the disclosure, the terminal device may be a Mobile Phone, a tablet computer (Pad), a computer having a wireless transmission and reception function, a Virtual Reality (VR) terminal device, an Augmented Reality (AR) terminal device, a wireless terminal device in the industrial control, a wireless terminal device in the self driving, a wireless terminal device in the remote medical, a wireless terminal device in the smart grid, a wireless terminal device in the transportation safety, a wireless terminal device in the smart city, a wireless terminal device in the smart home, an in-vehicle communication device, a wireless communication chip/application specific integrated circuit (ASIC)/System on Chip (SoC), or the like.

As an example rather than a limitation, in the embodiments of the disclosure, the terminal device may also be a wearable device. The wearable device may also be referred to as a wearable smart device, which is a general name of the wearable devices developed by intelligently designing for daily wears with a wearable technology, such as glasses, gloves, watches, clothing, shoes, or the like. The wearable device is a portable device that is worn directly on the body or integrated into the user's clothes or accessories. The wearable device is not only a hardware device, but also a device realizing powerful functions through software support, data interaction and cloud interaction. Generalized wearable smart devices include devices (such as smart watches, smart glasses, or the like) with full functions and large size, which may implement complete or partial functions without relying on a smartphone, and devices (such as various smart bracelets, smart jewelries, or the like, for monitoring physical signs) which only focus on a certain type of application functions and need to be used in combination with other devices (such as a smartphone).

In the embodiments of the disclosure, the network device may be a device for communicating with a mobile device. The network device may be an Access Point (AP) in the WLAN, a Base Transceiver Station (BTS) in the GSM or CDMA, a NodeB (NB) in the WCDMA, an Evolutional Node B (eNB or eNodeB) in the LTE, a relay station or an AP, an in-vehicle device or a wearable device, a network device or base station (gNB) or a Transmission Reception Point (TRP) in an NR network, a network device in a future evolved PLMN network, a network device in an NTN network, or the like.

As an example rather than a limitation, in the embodiments of the disclosure, the network device may have mobility, for example, the network device may be a mobile device. In some embodiments, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, or the like. In some embodiments, the network device may also be a base station arranged on land, water, or the like.

In the embodiments of the disclosure, the network device may provide services for a cell, and the terminal device communicates with the network device through the transmission resource (such as a frequency-domain resource, which is also referred to as a spectrum resource) used by the cell. The cell may be a cell corresponding to the network device (e.g., a base station), and the cell may belong to a macro base station or a base station corresponding to a Small cell. The small cell here may include a Metro cell, a Micro cell, a Pico cell, a Femto cell, or the like. These small cells have characteristics of small coverage and low transmission power, which are suitable for providing services of high-speed data transmission.

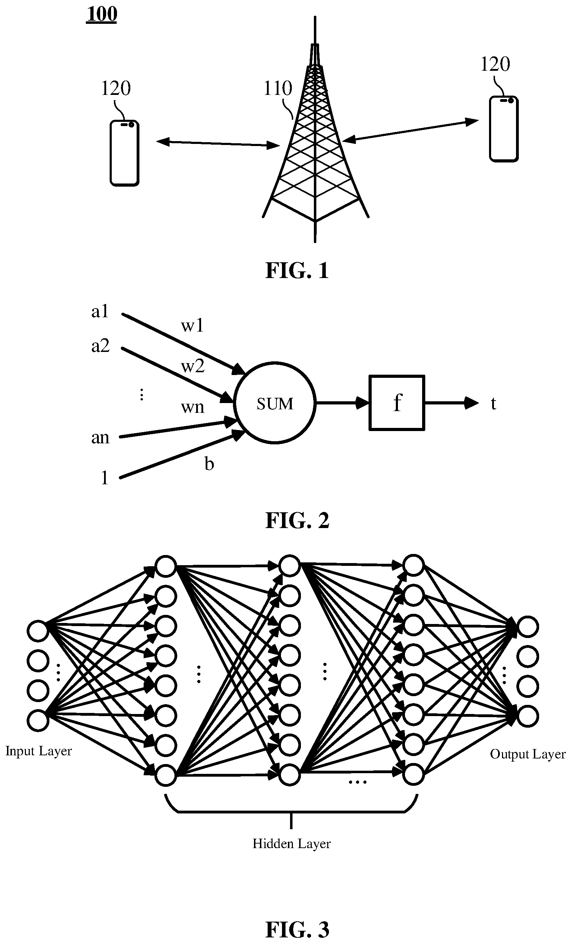

Exemplarily, a communication system 100, to which an embodiment of the disclosure is applied, is shown in FIG. 1. The communication system 100 may include a network device 110, and the network device 110 may be a device that communicates with a terminal device 120 (or referred to as a communication terminal or a terminal). The network device 110 may provide communication coverage for a specific geographic area and may communicate with a terminal device located within the coverage area.

FIG. 1 exemplarily illustrates a network device and two terminal devices. In some embodiments, the communication system 100 may include multiple network devices, and other numbers of terminal devices may be included within the coverage area of each network device, which is not limited by the disclosure.

In some embodiments, the communication system 100 may further include other network entities, such as a network controller or a mobile management entity, which is not limited by the embodiments of the disclosure.

It is to be understood that a device in the network/system in the embodiments of the disclosure, which has a communication function, may be referred to as a communication device. Taking the communication system 100 shown in FIG. 1 as an example, the communication device may include a network device 110 and a terminal device 120 which have a communication function. The network device 110 and the terminal device 120 may be the specific devices described above, which will not be repeated here. The communication device may further include another device in the communication system 100, such as a network controller, a mobile management entity, or other network entities, which is not limited by the embodiments of the disclosure.

It is to be understood that the terms "system" and "network" may often be used interchangeably herein. The term "and/or" herein is only a description of an association relationship of associated objects, representing that there may be three kinds of relationships. For example, A and/or B may represent three conditions: i.e., independent existence of A, existence of both A and B and independent existence of B. In addition, the character "/" herein usually represents that the previous and next associated objects are in an "or" relationship.

Terms used in the part of detailed description of the disclosure are used only for explaining specific embodiments of the disclosure, and are not intended to limit the disclosure. Terms "first", "second", "third", "fourth", or the like in the description, the claims and the drawings of the disclosure are used to distinguish different objects rather than to describe a particular order. Furthermore, terms "include" and "have", and any variations thereof, are intended to cover non-exclusive inclusion.

It is to be understood that "indicate" mentioned in the embodiments of the disclosure may be a direct indication, an indirect indication, or may represent an association relationship. For example, A indicating B may represent that A directly indicates B, e.g., B may be obtained through A; or that A indirectly indicates B, e.g., A indicates C, and B may be obtained through C; or that there is an association relationship between A and B.

In the description of the embodiments of the disclosure, the term "corresponding to" may represent that there is a direct correspondence or an indirect correspondence between two elements; or that there is an association relationship between the two elements; or a relationship in which one element indicates or is indicated by the other element, or one element configures or is configured by the other element, or the like.

In the embodiments of the disclosure, "pre-defined" or "pre-configured" may be implemented by pre-storing corresponding codes or tables in a device (e.g., including a terminal device and a network device), or other manners that may be used to indicate related information, the specific implementations of which are not limited by the disclosure. For example, the "pre-defined" may refer to what is defined in a protocol.

In the embodiments of the disclosure, the "protocol" may refer to a standard protocol in the field of communication, such as an evolution of the existing LTE protocol, NR protocol, Wi-Fi protocol, or a protocol related to other related communication systems. The type of the protocol is not limited by the disclosure.

In order to facilitate a better understanding of the embodiments of the disclosure, neural networks and machine learning related to the disclosure are illustrated.

A Neural Network (NN) is a computational model composed of multiple interconnected neuron nodes. A connection between nodes denotes a weighted value from the input signal to the output signal, which is referred to as a weight. Each node performs a weighted summation (SUM) on different input signals, and outputs through a specific activation function (f). FIG. 2 is a schematic diagram of a structure of a neuron, here, a1, a2, ..., an denote input signals, w1, w2, ..., wn denote weights, f denotes the activation function, and t denotes the output.

A simple neural network is as shown in FIG. 3, which includes an input layer, a hidden layer, and an output layer. Through different connection manners, weights and activation functions of multiple neurons, different outputs may be generated to fit the mapping relationship from input to output. Each node in a higher level is connected to all nodes in the next level. The neural network is a fully connected neural network, which may also be referred to as a Deep Neural Network (DNN).

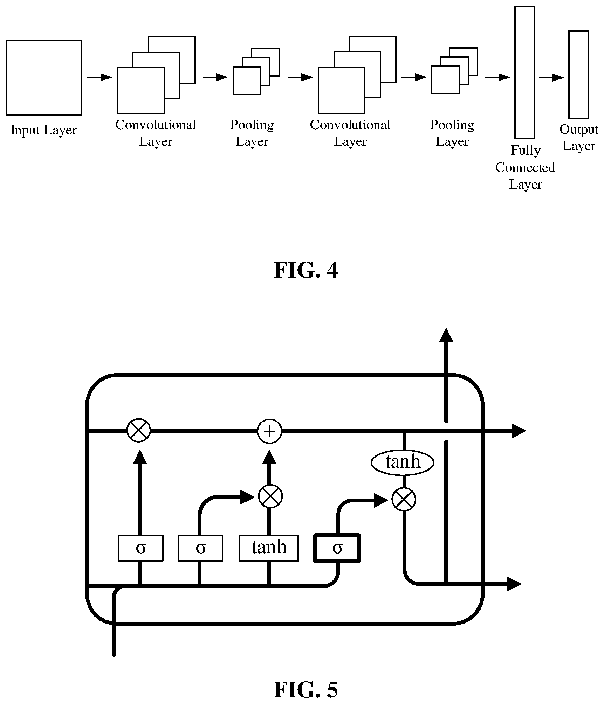

As shown in FIG. 4, the basic structure of a Convolutional Neural Network (CNN) includes an input layer, multiple convolutional layers, multiple pooling layers, a fully connected layer, and an output layer. Each neuron of the convolution kernel in the convolutional layer is locally connected to its input, and pooling layers are introduced to extract local maximum or average features of a certain layer, which effectively reduces the parameters of the network and digs local features, such that the CNN may converge quickly and achieve excellent performance.

The deep learning adopts the deep neural network with multiple hidden layers, which significantly improves the network's ability to learn features and may fit complex non-linear mappings from input to output, and thus is widely used in the field of speech and image processing. In addition to the DNN, deep learning also includes common basic structures such as a CNN and a Recurrent Neural Network (RNN) for different tasks.

As shown in FIG. 4, the basic structure of the CNN includes an input layer, multiple convolutional layers, multiple pooling layers, a fully connected layer, and an output layer. Each neuron of the convolution kernel in the convolutional layer is locally connected to its input, and pooling layers are introduced to extract local maximum or average features of a certain layer, which effectively reduces the parameters of the network and digs local features, such that the CNN may converge quickly and achieve excellent performance.

The RNN is a neural network for modeling sequential data, and has achieved significant results in the field of natural language processing, such as machine translation and speech recognition. Specifically, the network device memorizes information at the past moments and uses it in the current output calculation. That is to say, nodes between the hidden layers are connected instead of being disconnected. The input of the hidden layer includes outputs of the input layer and the hidden layer at the previous moment. A common-used RNN includes structures such as a Long Short-Term Memory (LSTM) and a Gated Recurrent Unit (GRU). FIG. 5 illustrates a basic structure of an LSTM unit, which may include a tanh activation function. Unlike the RNN that only considers recent states, the cell state of the LSTM determines which states should be retained and which should be forgotten, which addresses the defects of the conventional RNN in long-term memory.

In order to facilitate a better understanding of the embodiments of the disclosure, NR beam management related to the disclosure is illustrated.

In the NR system, communication in the millimeter-wave frequency band is introduced, and the corresponding beam management mechanism is also introduced, which may be divided into uplink and downlink beam management. Downlink beam management includes processes such as downlink beam sweeping, terminal (UE) beam measurement and reporting, and downlink beam indication from the network (NW).

The downlink beam sweeping process may include three processes, i.e., process P1, process P2, and process P3. In process P1, the network device sweeps different transmission beams, and the UE sweeps different reception beams. In process P2, the network device sweeps different transmission beams, and the UE uses the same reception beam. In process P3, the network device uses the same transmission beam, and the UE sweeps different reception beams. Generally, the network device completes the above beam sweeping process by sending a downlink reference signal. Optionally, the downlink reference signal may include, but is not limited to, a Synchronization Signal Block (SSB) and/or a Channel State Information Reference Signal (CSI-RS).

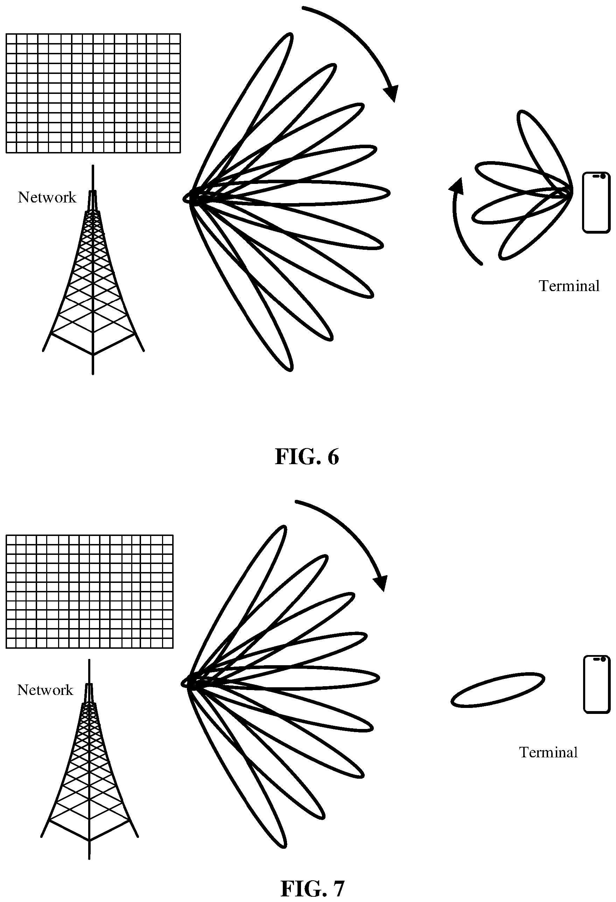

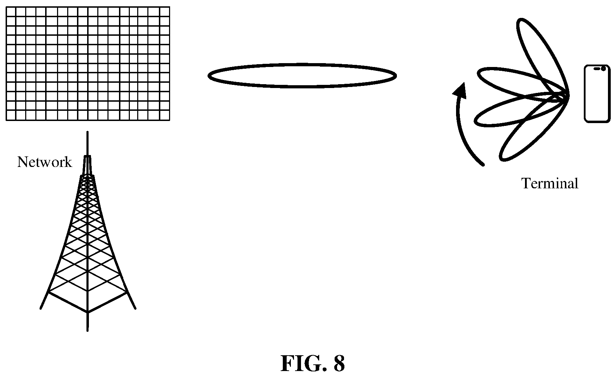

FIG. 6 illustrates a schematic diagram of process P1 (which is also referred to as a downlink full sweeping process), FIG. 7 illustrates a schematic diagram of process P2, and FIG. 8 illustrates a schematic diagram of process P3.

As shown in FIG. 6, in process P1, the network device traverses all transmission beams to send the downlink reference signal, and the UE side traverses all reception beams to perform measurement, so as to determine the corresponding measurement result.

As shown in FIG. 7, in process P2, the network device traverses all transmission beams to send the downlink reference signal, and the UE side uses a specific reception beam to perform measurement, so as to determine the corresponding measurement result.

As shown in FIG. 8, in process P3, the network device may use a specific transmission beam to send the downlink reference signal, and the UE side traverses all reception beams to perform measurement, so as to determine the corresponding measurement result.

Conventional beam reporting in the NR is as follows. The UE measures the Layer1 Reference Signal Receiving Power (L1-RSRP) values of different beams (beam pairs) to select K transmission beams having the highest L1-RSRP values, and reports to the NW in the form of Uplink Control Information (UCI). Here, the L1-RSRP may also be replaced by other beam link indexes, such as the Layer1 Signal to Interference plus Noise Ratio (L1-SINR), the Layer1 Reference Signal Received Quality (L1-RSRQ), or the like.

The above optimal K transmission beams, when used individually, may be used by the NW as the downlink transmission beam, and the UE may find the corresponding reception beam. However, it cannot be guaranteed that the UE can always find the corresponding reception beam when the NW uses two or more transmission beams.

After the network device knows the optimal beam reported by the terminal device, the network device may carry the Transmission Configuration Indicator (TCI) state (which includes the downlink reference signal as the referred transmission beam) through an Media Access Control (MAC) or a Downlink Control Information (DCI) signaling, to complete beam indication for the UE. The UE uses a reception beam corresponding to the transmission beam to perform downlink reception.

In the NR, considering that the L1-RSRP cannot reflect the mutual interference between transmission beams and may only reflect the strength of the useful signal beam, a transmission beam measurement and reporting mechanism based on the L1-SINR is introduced.

The Signal to Interference plus Noise Ratio (SINR) is defined as S/(I+N). Here, S denotes the power of the useful signal part, and (I+N) denotes the power of the interference and noise part.

Specifically, the UE needs to measure the power of two parts. The power of the first part is the power of the useful signal part, i.e., the S part, which is measured by a Channel Measurement Resource (CMR). The power of the second part is the power of the interference and noise part, i.e., the (I+N) part, which may be measured by an Interference Measurement Resource (IMR) if the NW configures the IMR, or a CMR may be used to measure the interference if the NW does not configure the IMR. The CMR may be an SSB or a Non-Zero Power Channel State Information-Reference Signal (NZP CSI-RS) resource.

For interference and noise measurement of the IMR, the IMR may be a Channel State Information Interference Resources (CSI-IM), that is, the UE considers all the measured power on a time-frequency resource configured by the NW (without a configured reference signal) as interference plus noise. The IMR may also be an NZP CSI-RS, that is, the UE considers the measured non-zero power reference signal as interference plus noise.

The CMR is associated with the IMR. That is, when the NW configures a CMR for the UE, it will configure one, two, or zero associated IMRs. For example, if a CMR is configured with an IMR, the IMR is either an NZP CSI-RS resource or a CSI-IM resource. If a CMR is configured with two IMRs, one of the IMRs is an NZP CSI-RS resource and the other is a CSI-IM resource. If a CMR is configured with zero IMR (i.e., no IMR is configured), the UE uses the CMR to measure the useful signal part and the interference and noise part.

For interference and noise measurement of the CMR, the implementation of the UE is as follows. Firstly, it is necessary to recover the useful signal (i.e., the S part) from the received signal and calculate its power. Then, the S part is eliminated from the received signal to obtain the residual interference and noise part, and the power is calculated. Finally, the calculation result of the SINR is obtained.

In order to facilitate a better understanding of the embodiments of the disclosure, AI/ML-based beam management related to the disclosure is illustrated.

The AI/ML-based beam management may be downlink beam prediction in the spatial domain.

Beam prediction in the spatial domain (which may also be referred to as beam management case 1 (BM-Case1)) is to perform spatial domain prediction on downlink beams in prediction data set A (Set A) by measuring beams in measurement data set B (Set B). Set B may be a subset of Set A or a beam set different from Set A. Set B may be understood as a partial subset of beams (beam pairs), and Set A may be understood as the complete set of beams (beam pairs).

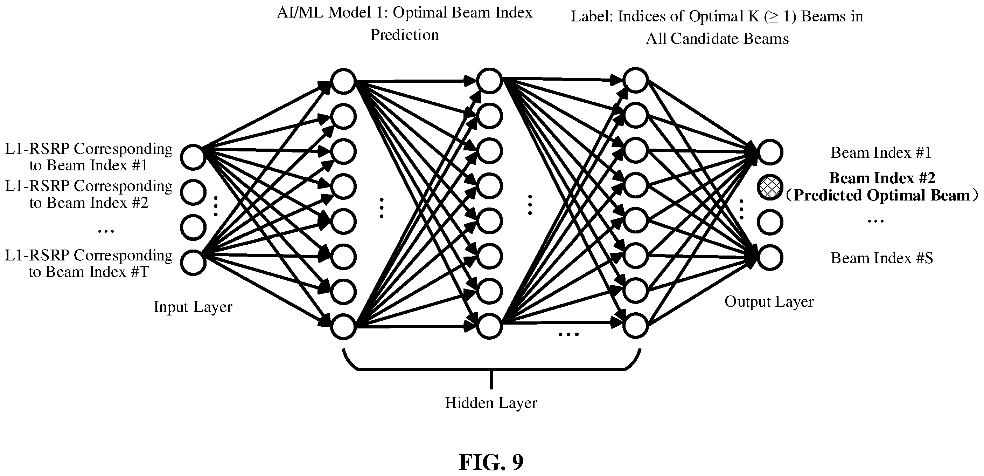

FIG. 9 schematically illustrates the relationship between the input and output of the beam prediction model. It may be considered that the model solves a multi-classification problem, that is, the relationship between L1-RSRP input from the partial subset (Set B) and L1-RSRP of optimal K beams. Here, the partial beam measurement set (i.e., Set B, which is a part of the measured L1-RSRP of Set A) is taken as the input to the model. The output is optimal K beam indices selected from the complete set (Set A), i.e., K beams having the highest L1-RSRP. The label used by the model is the optimal K beam indices (i.e., having the highest L1-RSRP) measured in the complete set (Set A). Specifically, as shown in FIG. 9, measurement data set B (Set B) includes L1-RSRP corresponding to T beam indices, and prediction data set A (Set A) includes S beam indices. AI/ML model 1 predicts the optimal K beam indices (Beam Index #2 in FIG. 9). It is to be noted that the beams in FIG. 9 may also be replaced with beam pairs, the specific description of which is similar with that of the beams and is not repeated here.

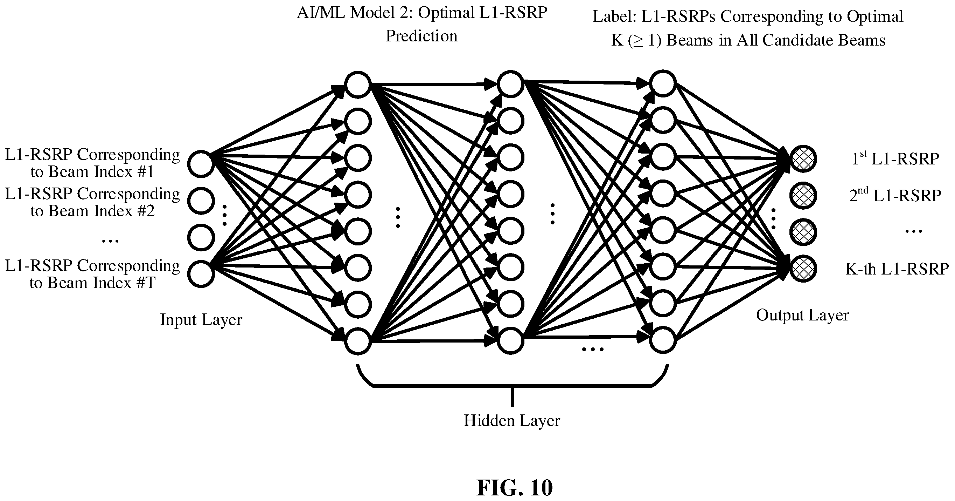

FIG.10 schematically illustrates an optimal beam quality prediction model, which may be understood as a linear regression problem. The relationship between the input and output of the model is the relationship between L1-RSRP input from the partial subset (Set B) and L1-RSRP of optimal K beams. The input of the model is the same as that in FIG. 9, but the output is different. The output of the model is K (K ≥ 1) optimal L1-RSRP. The label is the optimal K L1-RSRP measured in the complete set (Set A) and corresponding K beam indices. Specifically, as shown in FIG. 10, measurement data set B (Set B) includes L1-RSRP corresponding to T beam indices, and prediction data set A (Set A) includes L1-RSRP corresponding to S beam indices. AI/ML model 2 predicts K (K ≥ 1) optimal L1-RSRP. It is to be noted that the beams in FIG. 10 may also be replaced with beam pairs, the specific description of which is similar with that of the beams and is not repeated here.

In order to facilitate a better understanding of the embodiments of the disclosure, the problem solved by the disclosure is illustrated.

For the beam sweeping process of the NR, sweeping a large number of spatial beams (beam pairs) results in significant reference signal overhead and measurement latency. For example, it is assumed that the NW deploys 64 different downlink transmission directions in FR2 (carried by up to 64 SSBs), the UE uses multiple antenna panels (including panels with only one reception beam) to simultaneously perform reception beam sweeping, and each antenna panel has 4 reception beams. The UE needs to measure at least 64×4=256 beam pairs, which corresponds to required downlink resource overhead of 256 resources and a sweeping time of approximately 80 milliseconds (each SSB period is 20ms and 4 periods are required in total). Therefore, in the NR evolution, use cases for beam (pair) prediction in the spatial domain and time domain are defined.

The spatial domain beam prediction (BM-Case1) takes the L1-RSRP as the performance metric, but cannot reflect the interference between beams (beam pairs). However, the NW often uses multiple beams (beam pairs) to cover different UE during downlink transmission.

Based on the above problem, the disclosure proposes an AI/ML model-based beam (pair) prediction solution. In this way, the interference between beams (beam pairs) may be reflected in AI/ML model-based beam (pair) prediction, thereby improving the performance of the beam management system.

It is to be noted that a "beam (pair)" refers to a "beam" or a "beam pair". Specifically, a beam may refer to a transmission beam or a reception beam in the embodiments of the disclosure, and a beam pair refers to a pair of transmission and reception beams. Concepts of CMR and IMR are used in the disclosure. When the AI/ML model performs prediction of the transmission beam, the CMR may refer to the transmission beam. When the AI/ML model performs prediction of the transmission and reception beam pair, the CMR may refer to the transmission beam and the corresponding reception beam. The same also applies to the IMR. In addition, a spatial filter may be used to replace the beam (pair). For the AI/ML model, the output may be understood as inference or prediction. In the disclosure, inference and prediction have the same meaning and may be used interchangeably.

In order to facilitate the understanding of the technical solution of the embodiments of the disclosure, the technical solution of the disclosure is described in detail through specific embodiments. The following related technologies, as optional solutions, may be arbitrarily combined with the technical solution of the embodiments of the disclosure, all of which fall within the scope of protection of the embodiments of the disclosure. The embodiments of the disclosure include at least some of the following.

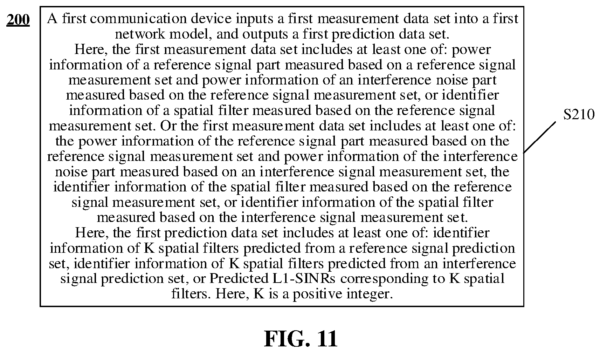

FIG. 11 is a schematic flowchart of a wireless communication method 200 according to an embodiment of the disclosure. As shown in FIG. 11, the wireless communication method 200 may include at least part of the following.

In operation S210, a first communication device inputs a first measurement data set into a first network model, and outputs a first prediction data set.

Here, the first measurement data set includes at least one of: power information of a reference signal part measured based on a reference signal measurement set and power information of an interference noise part measured based on the reference signal measurement set, or identifier information of a spatial filter measured based on the reference signal measurement set. Or the first measurement data set includes at least one of: the power information of the reference signal part measured based on the reference signal measurement set and power information of the interference noise part measured based on an interference signal measurement set, the identifier information of the spatial filter measured based on the reference signal measurement set, or identifier information of the spatial filter measured based on the interference signal measurement set.

Here, the first prediction data set includes at least one of: identifier information of K spatial filters predicted from a reference signal prediction set, identifier information of K spatial filters predicted from an interference signal prediction set, or Predicted L1-SINRs corresponding to K spatial filters. Here, K is a positive integer.

In the embodiments of the disclosure, the first communication device may input the measured power information of the reference signal part and the measured power information of the interference noise part into the first network model, so as to predict the identifier information of K spatial filters and/or the L1-SINRs corresponding to the K spatial filters. In other words, the interference between beams (beam pairs) may be reflected in AI/ML model-based beam (pair) prediction, thereby improving the performance of the beam management system.

In some embodiments, the first network model is an AI/ML model. Optionally, the first network model may be an AI/ML model used for spatial domain beam prediction, the specific implementation of which may be as shown in FIG. 9 or FIG. 10.

In some embodiments of the disclosure, the "reference signal measurement set" may also be referred to as a "useful signal measurement set", the "power information of the reference signal part" may also be referred to as "power information of a useful signal part", and the "reference signal prediction set" may also be referred to as a "useful signal prediction set", which is not limited by the disclosure.

In some embodiments of the disclosure, the spatial filter may also be referred to as a beam, a beam pair, a spatial relation, a spatial setting, a spatial domain filter, or the like, or the spatial filter may also be referred to as a reference signal.

In some embodiments, the spatial filter includes a transmit spatial filter. Optionally, the transmit spatial filter may also be referred to as a transmission beam (Tx beam) or a transmitter spatial filter, and the above terms may be used interchangeably.

In some embodiments, the spatial filter includes a receive spatial filter. Optionally, the receive spatial filter may also be referred to as a reception beam (Rx beam) or a receiver spatial filter, and the above terms may be used interchangeably.

In some embodiments, the spatial filter includes a transmit spatial filter and a receive spatial filter. Optionally, the combination of the transmit spatial filter and the receive spatial filter may also be referred to as a beam pair (i.e., a pair of a transmission beam (Tx beam) and a reception beam (Rx beam)), a spatial filter pair, or a spatial filter group, and the above terms may be used interchangeably.

In some embodiments, the identifier information of the spatial filter may be the index or identity of the spatial filter.

For example, the identifier information of the transmit spatial filter may be the index or identity of the transmit spatial filter.

For another example, the identifier information of the receive spatial filter may be the index or identity of the receive spatial filter.

For yet another example, the identifier information of the combination of the transmit spatial filter and the receive spatial filter may be a combined index.

In some embodiments, the power information of the reference signal part and the power information of the interference noise part may be the L1-RSRP, or other power parameters, which is not limited by the disclosure.

In some embodiments, the first communication device is a terminal device, or the first communication device is a network device.

In some embodiments, the identifier information of the spatial filter may be implicitly indicated by the position of the vector in the first network model to which the power information of the reference signal part and the power information of the interference noise part are input. For example, the power information of the reference signal part and the power information of the interference noise part corresponding to the first spatial filter are input to the first position of the first network model, the power information of the reference signal part and the power information of the interference noise part corresponding to the second spatial filter are input to the second position of the first network model, and so on.

Specifically, for example, the first measurement data set includes the power information of the reference signal part measured based on the reference signal measurement set and the power information of the interference noise part measured based on the reference signal measurement set. The first prediction data set includes the identifier information of the K spatial filters predicted from the reference signal prediction set.

Specifically, for example, the first measurement data set includes the power information of the reference signal part measured based on the reference signal measurement set and the power information of the interference noise part measured based on the reference signal measurement set. The first prediction data set includes the Predicted L1-SINRs corresponding to the K spatial filters.

Specifically, for example, the first measurement data set includes the power information of the reference signal part measured based on the reference signal measurement set and the power information of the interference noise part measured based on the reference signal measurement set. The first prediction data set includes the identifier information of the K spatial filters predicted from the reference signal prediction set, and the Predicted L1-SINRs corresponding to the K spatial filters.

Specifically, for example, the first measurement data set includes the power information of the reference signal part measured based on the reference signal measurement set and the power information of the interference noise part measured based on the reference signal measurement set. The first prediction data set includes the identifier information of the K spatial filters predicted from the reference signal prediction set, and the identifier information of the K spatial filters predicted from the interference signal prediction set.

Specifically, for example, the first measurement data set includes the power information of the reference signal part measured based on the reference signal measurement set and the power information of the interference noise part measured based on the reference signal measurement set. The first prediction data set includes the identifier information of the K spatial filters predicted from the reference signal prediction set, the identifier information of the K spatial filters predicted from the interference signal prediction set, and the Predicted L1-SINRs corresponding to the K spatial filters.

Specifically, for example, the first measurement data set includes the identifier information of the spatial filter measured based on the reference signal measurement set. The first prediction data set includes the Predicted L1-SINRs corresponding to the K spatial filters.

Specifically, for example, the first measurement data set includes the identifier information of the spatial filter measured based on the reference signal measurement set. The first prediction data set includes the identifier information of the K spatial filters predicted from the reference signal prediction set.

Specifically, for example, the first measurement data set includes the identifier information of the spatial filter measured based on the reference signal measurement set. The first prediction data set includes the identifier information of the K spatial filters predicted from the reference signal prediction set, and the identifier information of the K spatial filters predicted from the interference signal prediction set.

Specifically, for example, the first measurement data set includes the identifier information of the spatial filter measured based on the reference signal measurement set. The first prediction data set includes the identifier information of the K spatial filters predicted from the reference signal prediction set, the identifier information of the K spatial filters predicted from the interference signal prediction set, and the Predicted L1-SINRs corresponding to the K spatial filters.

Specifically, for example, the first measurement data set includes the power information of the reference signal part measured based on the reference signal measurement set and the power information of the interference noise part measured based on the interference signal measurement set. The first prediction data set includes the Predicted L1-SINRs corresponding to the K spatial filters.

Specifically, for example, the first measurement data set includes the power information of the reference signal part measured based on the reference signal measurement set and the power information of the interference noise part measured based on the interference signal measurement set. The first prediction data set includes the identifier information of the K spatial filters predicted from the reference signal prediction set, and the Predicted L1-SINRs corresponding to the K spatial filters.

Specifically, for example, the first measurement data set includes the power information of the reference signal part measured based on the reference signal measurement set and the power information of the interference noise part measured based on the interference signal measurement set. The first prediction data set includes the identifier information of the K spatial filters predicted from the reference signal prediction set, and the identifier information of the K spatial filters predicted from the interference signal prediction set.

Specifically, for example, the first measurement data set includes the power information of the reference signal part measured based on the reference signal measurement set and the power information of the interference noise part measured based on the interference signal measurement set. The first prediction data set includes the identifier information of the K spatial filters predicted from the reference signal prediction set, the identifier information of the K spatial filters predicted from the interference signal prediction set, and the Predicted L1-SINRs corresponding to the K spatial filters.

Specifically, for example, the first measurement data set includes the identifier information of the spatial filter measured based on the reference signal measurement set. The first prediction data set includes the Predicted L1-SINRs corresponding to the K spatial filters.

Specifically, for example, the first measurement data set includes the identifier information of the spatial filter measured based on the reference signal measurement set. The first prediction data set includes the identifier information of the K spatial filters predicted from the reference signal prediction set, and the Predicted L1-SINRs corresponding to the K spatial filters.

Specifically, for example, the first measurement data set includes the identifier information of the spatial filter measured based on the reference signal measurement set. The first prediction data set includes the identifier information of the K spatial filters predicted from the reference signal prediction set, and the identifier information of the K spatial filters predicted from the interference signal prediction set.

Specifically, for example, the first measurement data set includes the identifier information of the spatial filter measured based on the reference signal measurement set. The first prediction data set includes the identifier information of the K spatial filters predicted from the reference signal prediction set, the identifier information of the K spatial filters predicted from the interference signal prediction set, and the Predicted L1-SINRs corresponding to the K spatial filters.

Specifically, for example, the first measurement data set includes the identifier information of the spatial filter measured based on the reference signal measurement set, and the identifier information of the spatial filter measured based on the interference signal measurement set. The first prediction data set includes the Predicted L1-SINRs corresponding to the K spatial filters.

Specifically, for example, the first measurement data set includes the identifier information of the spatial filter measured based on the reference signal measurement set, and the identifier information of the spatial filter measured based on the interference signal measurement set. The first prediction data set includes the identifier information of the K spatial filters predicted from the reference signal prediction set, and the Predicted L1-SINRs corresponding to the K spatial filters.

Specifically, for example, the first measurement data set includes the identifier information of the spatial filter measured based on the reference signal measurement set, and the identifier information of the spatial filter measured based on the interference signal measurement set. The first prediction data set includes the identifier information of the K spatial filters predicted from the reference signal prediction set, and the identifier information of the K spatial filters predicted from the interference signal prediction set.

Specifically, for example, the first measurement data set includes the identifier information of the spatial filter measured based on the reference signal measurement set, and the identifier information of the spatial filter measured based on the interference signal measurement set. The first prediction data set includes the identifier information of the K spatial filters predicted from the reference signal prediction set, the identifier information of the K spatial filters predicted from the interference signal prediction set, and the Predicted L1-SINRs corresponding to the K spatial filters.

Specifically, for example, the first measurement data set includes the power information of the reference signal part measured based on the reference signal measurement set, the power information of the interference noise part measured based on the interference signal measurement set, the identifier information of the spatial filter measured based on the reference signal measurement set, and the identifier information of the spatial filter measured based on the interference signal measurement set. The first prediction data set includes the Predicted L1-SINRs corresponding to the K spatial filters.

Specifically, for example, the first measurement data set includes the power information of the reference signal part measured based on the reference signal measurement set, the power information of the interference noise part measured based on the interference signal measurement set, the identifier information of the spatial filter measured based on the reference signal measurement set, and the identifier information of the spatial filter measured based on the interference signal measurement set. The first prediction data set includes the identifier information of the K spatial filters predicted from the reference signal prediction set, and the Predicted L1-SINRs corresponding to the K spatial filters.

Specifically, for example, the first measurement data set includes the power information of the reference signal part measured based on the reference signal measurement set, the power information of the interference noise part measured based on the interference signal measurement set, the identifier information of the spatial filter measured based on the reference signal measurement set, and the identifier information of the spatial filter measured based on the interference signal measurement set. The first prediction data set includes the identifier information of the K spatial filters predicted from the reference signal prediction set, and the identifier information of the K spatial filters predicted from the interference signal prediction set.

Specifically, for example, the first measurement data set includes the power information of the reference signal part measured based on the reference signal measurement set, the power information of the interference noise part measured based on the interference signal measurement set, the identifier information of the spatial filter measured based on the reference signal measurement set, and the identifier information of the spatial filter measured based on the interference signal measurement set. The first prediction data set includes the identifier information of the K spatial filters predicted from the reference signal prediction set, the identifier information of the K spatial filters predicted from the interference signal prediction set, and the Predicted L1-SINRs corresponding to the K spatial filters.

In some embodiments, the reference signal measurement set includes M CMRs. Here, M is a positive integer. Specifically, for example, the reference signal measurement set may be represented as measurement set B (Set B), that is, Set B includes M CMRs. Optionally, the power information of the reference signal part (i.e., the power of the S part) may be measured based on the reference signal measurement set (Set B), or the power information of the reference signal part (i.e., the power of the S part) and the power information of the interference noise part (i.e., the power of the (I+N) part) may be measured based on the reference signal measurement set (Set B). Specifically, each CMR in the reference signal measurement set is measured to obtain the power information of the reference signal part (i.e., the power of the S part) of the corresponding CMR, or to obtain the power information of the reference signal part (i.e., the power of the S part) and the power information of the interference noise part (i.e., the power of the (I+N) part) of the corresponding CMR.

Specifically, for example, the UE may measure the IMR associated with the CMR in Set B', and correspondingly obtain the power information of the interference noise signal part (i.e., the power of the (I+N) part) of the IMR. If the CMR does not have an associated IMR, the UE uses the CMR as an IMR, and subtracts the power information of the reference signal part (i.e., the power of the S part) from the total power of the received signal, to obtain the power information of the residual interference noise signal part (i.e., the power of the (I+N) part).

Optionally, if the interference signal measurement set is not configured, or the interference signal measurement set includes 0 IMR, the power information of the reference signal part (i.e., the power of the S part) and the power information of the interference noise part (i.e., the power of the (I+N) part) may be measured based on the reference signal measurement set (Set B). Specifically, each CMR in the reference signal measurement set is measured to obtain the power information of the reference signal part (i.e., the power of the S part) and the power information of the interference noise part (i.e., the power of the (I+N) part) of the corresponding CMR.

In some embodiments, the interference signal measurement set includes M IMRs, or the interference signal measurement set includes 2M IMRs. Here, M is a positive integer. Specifically, for example, the interference signal measurement set may be represented as measurement set B' (Set B'), that is, Set B' includes M IMRs, or Set B' includes 2M IMRs. Specifically, each IMR in the interference signal measurement set may be measured to obtain the power information of the interference noise part (i.e., the power of the (I+N) part) of the corresponding IMR.

Optionally, the interference signal measurement set may also include 0 IMR. In such case, the power information of the reference signal part (i.e., the power of the S part) and the power information of the interference noise part (i.e., the power of the (I+N) part) may be measured based on the reference signal measurement set (Set B).

In some embodiments, the reference signal prediction set includes N CMRs. Here, N is a positive integer. Specifically, for example, the reference signal prediction set may be represented as prediction set A (Set A), that is, Set A includes N CMRs. Specifically, the identifier information of the K spatial filters and/or the Predicted L1-SINRs corresponding to the K spatial filters may be predicted based on the reference signal prediction set (Set A).

In some embodiments, the interference signal prediction set includes N IMRs, or the interference signal prediction set includes 2N IMRs. Here, N is a positive integer. Specifically, for example, the interference signal prediction set may be represented as prediction set A' (Set A'), that is, Set A' includes N IMRs, or Set A' includes 2N IMRs. Specifically, the identifier information of the K spatial filters may be predicted based on the interference signal prediction set (Set A'), or the identifier information of the K spatial filters and/or the Predicted L1-SINRs corresponding to the K spatial filters may be predicted based on the reference signal prediction set (Set A) and the interference signal prediction set (Set A').

Optionally, the interference signal prediction set includes 0 IMR, that is, no IMR is configured in the interference signal prediction set. In such case, the identifier information of the K spatial filters and/or the Predicted L1-SINRs corresponding to the K spatial filters may be predicted based on the reference signal prediction set (Set A).

In some embodiments, M < N. Optionally, 4M = N, or 8M = N. Of course, M and N may also satisfy other proportional relationships, which is not limited by the disclosure. Specifically, from the perspective of spatial domain beam (pair) prediction, the reference signal measurement set (M CMRs) is smaller than the reference signal prediction set (N CMRs), for example, 4M = N, or 8M = N. The advantage of such approach is that the measurement overhead of the CMR and IMR for calculating the L1-SINR may be significantly reduced.

In some embodiments, no matter in the measurement sets or in the prediction sets, certain association relationships are configured by the network (NW) for CMRs and IMRs. Specifically, for any CMR, the NW may configure 0 IMR (i.e., no associated IMR), or 1 IMR (i.e., an NZP CSI-RS resource or a CSI-IM resource), or 2 IMRs (i.e., an NZP CSI-RS resource and a CSI-IM resource).

In some embodiments, there is a one-to-one association relationship between CMRs in the M CMRs and IMRs in the M IMRs.

In some embodiments, there is a one-to-two association relationship between the CMRs in the M CMRs and IMRs in the 2M IMRs.

In some embodiments, the M CMRs include at least one of an NZP CSI-RS resource or an SSB resource.

In some embodiments, the M IMRs include at least one of an NZP CSI-RS resource or a CSI-IM. Alternatively, the 2M IMRs include at least one of an NZP CSI-RS resource or a CSI-IM.

In some embodiments, there is a one-to-one association relationship between CMRs in the N CMRs and IMRs in the N IMRs.

In some embodiments, there is a one-to-two association relationship between the CMRs in the N CMRs and IMRs in the 2N IMRs.

In some embodiments, the N CMRs include at least one of an NZP CSI-RS resource or an SSB resource.

In some embodiments, the N IMRs include at least one of an NZP CSI-RS resource or a CSI-IM. Alternatively, the 2N IMRs include at least one of an NZP CSI-RS resource or a CSI-IM.

In some embodiments, a CMR and an IMR, which have an association relationship, have the same Quasi-co-located (QCL) type D assumption. For example, for a QCL relationship between the CMR and IMR, the UE uses the same reception beam to receive the associated CMR and IMR (which only applies to the IMR being the NZP CSI-RS), that is, the CMR has the same QCL-TypeD assumption as the IMR being the NZP CSI-RS. For the IMR being the CSI-IM, there is no QCL assumption, and thus the IMR being the CSI-IM does not have a QCL relationship with the CMR.

In some embodiments, the first measurement data set is measured by the first communication device. For example, the first communication device is a terminal device, and the terminal device measures the first measurement data set.

In some embodiments, the first measurement data set is measured by another device and reported to the first communication device. For example, the first communication device is a network device, the terminal device measures the first measurement data set, and the terminal device reports the first measurement data set to the network device.

In some embodiments, the first network model is determined by the first communication device, or the first network model is configured or indicated by another device.

Specifically, if the UE supports spatial domain beam (pair) prediction and the model used for prediction is a cell-specific model, the NW transfers the model adapted to the NW deployment environment and beam (pair) configuration (i.e., the first network model) to the UE. For example, the NW indicates a specific model identity (model ID) (i.e., an Identity (ID) defined in the lifecycle management of the model, which is used to identify different models) to the UE through an RRC and/or an MAC CE, and the model identity is used to indicate the first network model. Alternatively, the UE initiates a model pre-prepared by itself (i.e., the first network model), and may optionally inform the NW of information of the model, such as through the model ID.

It is to be noted that in the process of using the model ID for model communication, the most important assumption is that the NW and the UE have a clear consensus and understanding of model details expressed by the model ID.

In some embodiments, the first communication device is a terminal device.

In some embodiments, before the first communication device performs prediction of a spatial filter in spatial domain based on the first network model, the first communication device sends first capability information. Here, the first capability information is used to indicate that the first communication device supports prediction of a spatial filter in spatial domain based on the L1-SINR. Optionally, the first capability information may also indicate that the first communication device does not support the prediction of a spatial filter in spatial domain based on the L1-SINR. That is, the first capability information may indicate whether the first communication device supports the prediction of a spatial filter in spatial domain based on the L1-SINR. For example, the first capability information occupies 1 bit, the value of 0 indicates that the prediction of a spatial filter in spatial domain based on the L1-SINR is supported, and the value of 1 indicates that the prediction of a spatial filter in spatial domain based on the L1-SINR is not supported. Alternatively, the first capability information occupies 1 bit, the value of 1 indicates that the prediction of a spatial filter in spatial domain based on the L1-SINR is supported, and the value of 0 indicates that the prediction of a spatial filter in spatial domain based on the L1-SINR is not supported.

Specifically, the first communication device is the terminal device, and the terminal device sends the first capability information to the network device. That is, in the embodiments of the disclosure, before the NW configures the AI/ML model for the UE, the UE needs to inform the NW through UE capability reporting whether it supports the spatial domain beam (pair) prediction based on the L1-SINR.

In some embodiments, the first capability information may be carried by one of:
a Radio Resource Control (RRC) signaling, Uplink Control Information (UCI), or a Media Access Control Control Element (MAC CE) signaling.

In some embodiments, the first capability information further includes at least one of, but is not limited to:
the maximum number of reference signal resources included in the reference signal measurement set;
the maximum number of interference signal resources included in the interference signal measurement set;
whether the NZP CSI-RS resource is supported as the IMR;
the maximum number of NZP CSI-RS resources supported for measurement when the NZP CSI-RS resource is supported as the IMR;
whether the CSI-IM is supported as the IMR;
the maximum number of CSI-IMs supported for measurement when the CSI-IM is supported as the IMR;
whether the power information of the reference signal part and the power information of the interference noise part are supported to be measured based on the reference signal measurement set;
the maximum size of the reference signal prediction set;
the maximum size of the interference signal prediction set; or
the maximum value of K.

Specifically, before the NW configures the AI/ML model for the UE, the UE needs to inform the NW through UE capability reporting whether it supports the spatial domain beam (pair) prediction based on the L1-SINR. If such characteristic is supported, capabilities reported by the UE include at least one of, but are not limited to:
the maximum number of SSB resources and/or CSI-RS resources that may be measured by the reference signal measurement set (Set B);
the maximum number of CSI-IM resources and/or NZP CSI-RS resources that may be measured by the interference signal measurement set (Set B');
whether the NZP CSI-RS is supported as the IMR; and the maximum number of NZP CSI-RS resources that may be measured if supported;
whether the CSI-IM is supported as the IMR; and the maximum number of CSI-IM resources that may be measured if supported;
whether the CMR is supported to be used as the IMR (i.e., whether the power information of the reference signal part and the power information of the interference noise part are supported to be measured based on the reference signal measurement set (Set B));
the maximum size of the prediction set that may be predicted, i.e., the maximum size of Set A and Set A'; or
the maximum number of beams (beam pairs) output by the first network model, i.e., the maximum value of K in Top-K.

In some embodiments, before the first communication device performs the prediction of a spatial filter in spatial domain based on the first network model, the first communication device receives first information.

Here, the first information is used to configure at least one of: the reference signal measurement set, the interference signal measurement set, the reference signal prediction set, or the interference signal prediction set.

Alternatively, the first information is used to activate at least one of: a reference signal measurement set of pre-configured multiple reference signal measurement sets, an interference signal measurement set of pre-configured multiple interference signal measurement sets, a reference signal prediction set of pre-configured multiple reference signal prediction sets, or an interference signal prediction set of pre-configured multiple interference signal prediction sets.

Specifically, the first communication device is the terminal device. That is, before the terminal device performs the prediction of a spatial filter in spatial domain based on the first network model, the terminal device receives the first information from the network device.

Specifically, the NW configures and/or activates the reference signal measurement set (Set B) and the interference signal measurement set (Set B') required for model input for the UE. The NW configures, through the RRC signaling, one or more groups of Set B and Set B' for the UE. As the reference signal measurement set, Set B may include an NZP CSI-RS resource and/or an SSB resource. As the interference signal measurement set, Set B' may include an NZP CSI-RS resource and/or a CSI-IM. Of course, Set B' may also not include any dedicated IMR, that is, the UE uses CMRs to measure interference and noise. If the NW configures multiple groups of Set B and Set B', the NW further needs to activate, through the MAC CE signaling, one group of Set B and Set B' of the multiple configured groups according to the actual deployment and antenna configuration. Otherwise, only the configured one group of Set B and Set B' is used.

Specifically, the NW configures and/or activates the reference signal prediction set (Set A) and the interference signal prediction set (Set A') for model output for the UE.

The NW configures, through the RRC signaling, one or more groups of associated reference signal prediction set (Set A) and interference signal prediction set (Set A') for the UE. As the reference signal prediction set, Set A may include an NZP CSI-RS resource and/or an SSB resource. As the interference signal prediction set, Set A' may include an NZP CSI-RS resource and/or a CSI-IM resource. Of course, Set A' may also not include any dedicated IMR, that is, the UE uses CMRs to measure interference and noise. If the NW configures multiple groups of Set A and Set A', the NW further needs to activate, through the MAC CE signaling, one group of associated Set A and Set A' of the multiple configured groups according to the actual deployment and antenna configuration. Otherwise, only the configured one group of Set A and Set A' is used.

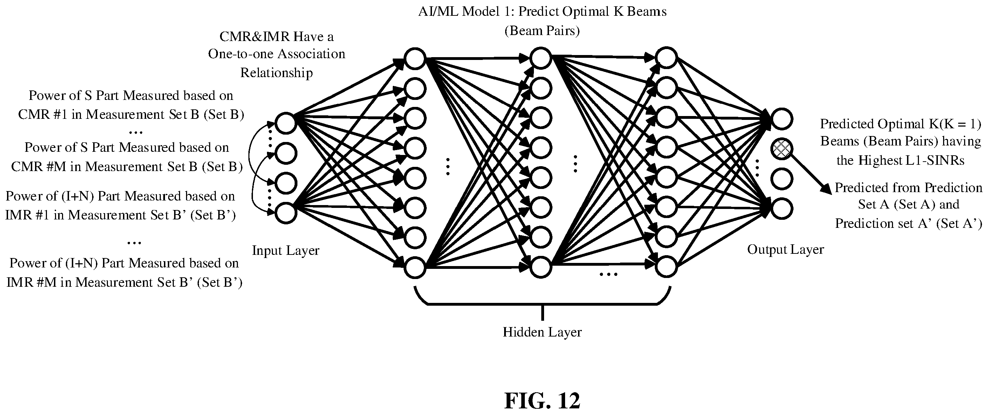

In some embodiments, as shown in FIG. 12, the first communication device is the terminal device, the CMRs in the M CMRs (Set B) have a one-to-one association relationship with the IMRs in the M IMRs (Set B'), and the first network model is AI/ML model 1. Specifically, as shown in FIG. 12, the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') may be taken as the input of AI/ML model 1 (which predicts information of the Top-K beams (beam pairs)). Specifically, the terminal device measures the CMRs to obtain the power of the reference signal part (i.e., the S part), and measures the IMRs to obtain the power of the interference noise part (i.e., the (I+N) part). The output of AI/ML model 1 is the optimal K beams (beam pairs) (based on the predicted L1-SINRs sorted from high to low) inferred from the reference signal prediction set (Set A) and the interference signal prediction set (Set A').

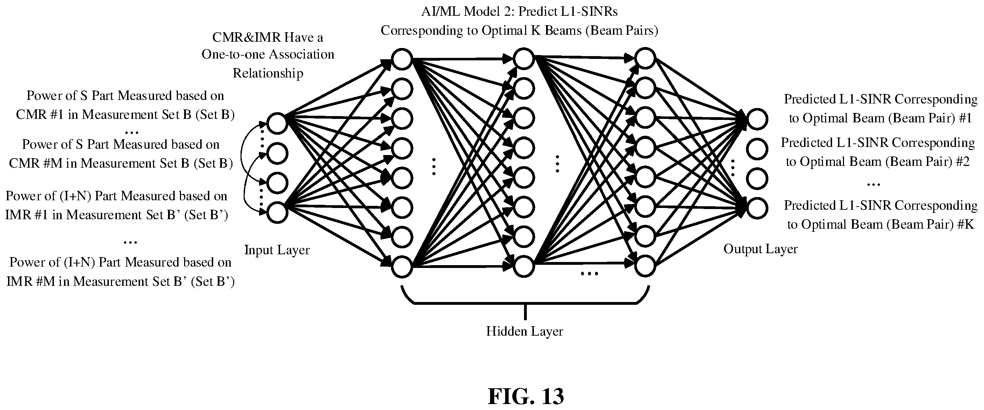

In some embodiments, as shown in FIG. 13, the first communication device is the terminal device, the CMRs in the M CMRs (Set B) have a one-to-one association relationship with the IMRs in the M IMRs (Set B'), and the first network model is AI/ML model 2. Specifically, as shown in FIG. 13, the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') may be taken as the input of AI/ML model 2 (which predicts L1-SINRs corresponding to the Top-K beams (beam pairs)). Specifically, the terminal device measures the CMRs to obtain the power of the reference signal part (i.e., the S part), and measures the IMRs to obtain the power of the interference noise part (i.e., the (I+N) part). The output of AI/ML model 2 is the L1-SINR values corresponding to the optimal K beams (beam pairs) inferred from the reference signal prediction set (Set A) and the interference signal prediction set (Set A').

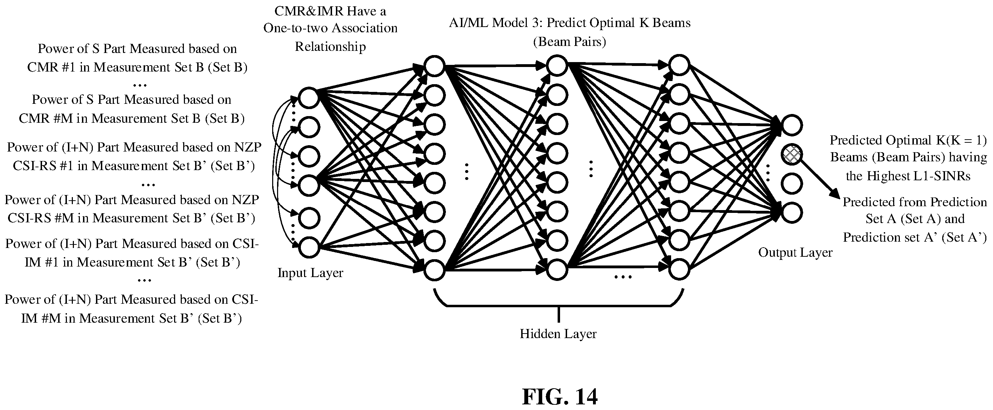

In some embodiments, as shown in FIG. 14, the first communication device is the terminal device, and the CMRs in the M CMRs (Set B) have a one-to-two association relationship with the IMRs in the 2M IMRs (Set B'). Here, one of the two IMRs corresponding to a CMR is an NZP CSI-RS, and the other one is a CSI-IM. The first network model is AI/ML Model 3. Specifically, as shown in FIG. 14, the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') may be taken as the input of AI/ML model 3 (which predicts information of the Top-K beams (beam pairs)). Specifically, the terminal device measures the CMRs to obtain the power of the reference signal part (i.e., the S part), and measures the IMRs to obtain the power of the interference noise part (i.e., the (I+N) part). The output of AI/ML model 3 is the optimal K beams (beam pairs) (based on the predicted L1-SINRs sorted from high to low) inferred from the reference signal prediction set (Set A) and the interference signal prediction set (Set A').

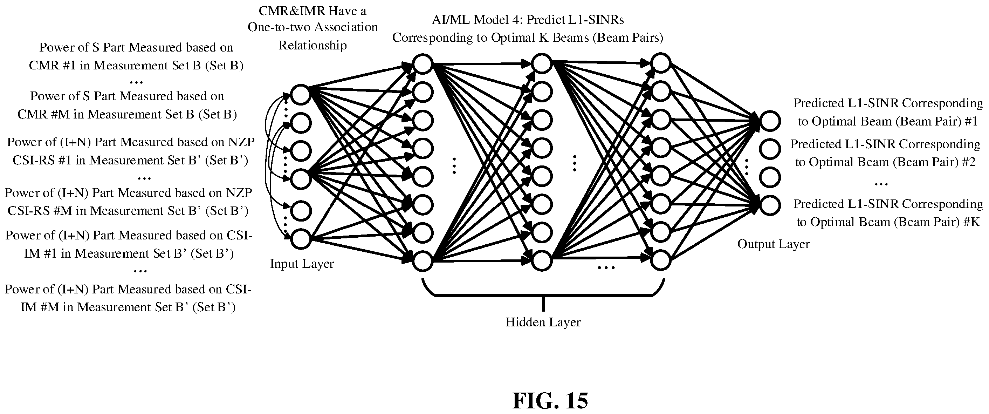

In some embodiments, as shown in FIG. 15, the first communication device is the terminal device, and the CMRs in the M CMRs (Set B) have a one-to-two association relationship with the IMRs in the 2M IMRs (Set B'). Here, one of the two IMRs corresponding to a CMR is an NZP CSI-RS, and the other one is a CSI-IM. The first network model is AI/ML model 4. Specifically, as shown in FIG. 15, the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') may be taken as the input of AI/ML model 4 (which predicts L1-SINRs corresponding to the Top-K beams (beam pairs)). Specifically, the terminal device measures the CMRs to obtain the power of the reference signal part (i.e., the S part), and measures the IMRs to obtain the power of the interference noise part (i.e., the (I+N) part). The output of AI/ML model 4 is the L1-SINR values corresponding to the optimal K beams (beam pairs) inferred from the reference signal prediction set (Set A) and the interference signal prediction set (Set A').

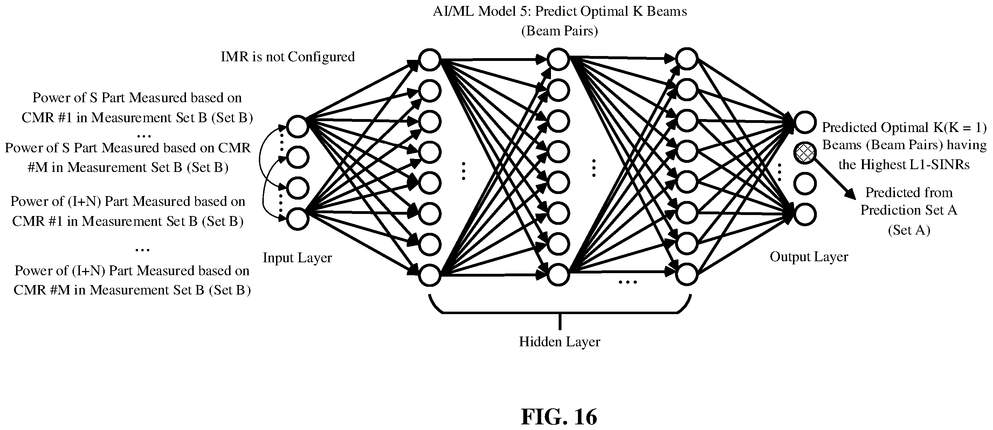

In some embodiments, as shown in FIG. 16, the first communication device is the terminal device, and the network device configures M CMRs (Set B) but does not configure any IMR (Set B'). The first network model is AI/ML Model 5. Specifically, as shown in FIG. 16, the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the CMRs in the reference signal measurement set (Set B) may be taken as the input of AI/ML model 5 (which predicts information of the Top-K beams (beam pairs)). Specifically, the terminal device measures the CMRs to obtain the power of the reference signal part (i.e., the S part), and measures the CMRs to obtain the power of the interference noise part (i.e., the (I+N) part). Specifically, the terminal device needs to pre-process measurements of the CMRs to separate the power of the S part of the reference signal and the power of the interference noise (I+N) part of the reference signal. The output of AI/ML Model 5 is the optimal K beams (beam pairs) (based on the predicted L1-SINRs sorted from high to low) inferred from the reference signal prediction set (Set A).

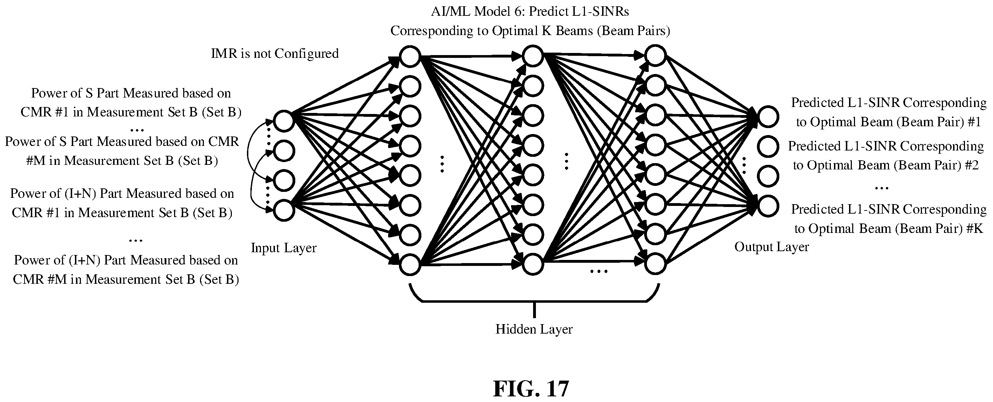

In some embodiments, as shown in FIG. 17, the first communication device is the terminal device, and the network device configures M CMRs (Set B) but does not configure any IMR (Set B'). The first network model is AI/ML model 6. Specifically, as shown in FIG. 17, the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the CMRs in the reference signal measurement set (Set B) may be taken as the input of AI/ML model 6 (which predicts L1-SINRs corresponding to the Top-K beams (beam pairs)). Specifically, the terminal device measures the CMRs to obtain the power of the reference signal part (i.e., the S part), and measures the CMRs to obtain the power of the interference noise part (i.e., the (I+N) part). Specifically, the terminal device needs to pre-process measurements of the CMRs to separate the power of the S part of the reference signal and the power of the interference noise (I+N) part of the reference signal. The output of AI/ML model 6 is the L1-SINR values corresponding to the optimal K beams (beam pairs) inferred from the reference signal prediction set (Set A).

In some embodiments, the first communication device sends first prediction information.

Here, the first prediction information includes part or all of contents of the first prediction data set.

Specifically, for example, the first communication device is the terminal device. That is, after predicting the first prediction data set, the terminal device may report part or all of the contents of the first prediction data set to the network device.

In some embodiments, the first prediction information may be carried by one of the RRC signaling, the UCI, or the MAC CE signaling.

In some embodiments, when the first prediction information includes at least the Predicted L1-SINRs corresponding to the K spatial filters, the L1-SINRs corresponding to the K spatial filters are represented in a differential manner.

Specifically, for example, the terminal device may report the identities of the K beams and the L1-SINRs corresponding to the K beams. Assuming K=4, the format of the information reported by the terminal device may be as shown in Table 1.

**Table 1**

| **CSI report number** | **CSI fields** |
|---|---|
| CSI report #n | Beam #1, if reported |
| | Beam #2, if reported |
| | Beam #3, if reported |
| | Beam #4, if reported |
| | L1-SINR corresponding to Beam #1, if reported |
| | Differential L1-SINR corresponding to Beam #2, if reported |
| | Differential L1-SINR corresponding to Beam #3, if reported |
| | Differential L1-SINR corresponding to Beam #4, if reported |

It is to be noted that in the above Table 1, the Differential L1-SINR corresponding to Beam #2 may be the difference relative to the L1-SINR corresponding to Beam #1, the Differential L1-SINR corresponding to Beam #3 may be the difference relative to the L1-SINR corresponding to Beam #1, and the Differential L1-SINR corresponding to Beam #4 may be the difference relative to the L1-SINR corresponding to Beam #1.

Specifically, for example, in case of model prediction based on the transmission beam, the terminal device reports information of the optimal K transmission beams. Since a CMR is associated with one, two, or zero IMRs, and the NW configures such association relationship, the terminal device may only report the CMR indices of the optimal K transmission beams. Assuming K=4, the format of the information reported by the terminal device may be as shown in Table 2.

**Table 2**

| **CSI report number** | **CSI fields** |
|---|---|
| CSI report #n | CMR #1, if reported |
| | CMR #2, if reported |
| | CMR #3, if reported |
| | CMR #4, if reported |
| | L1-SINR corresponding to CMR #1, if reported |
| | Differential L1-SINR corresponding to CMR #2, if reported |
| | Differential L1-SINR corresponding to CMR #3, if reported |
| | Differential L1-SINR corresponding to CMR #4, if reported |

It is to be noted that in the above Table 2, the Differential L1-SINR corresponding to CMR #2 may be the difference relative to the L1-SINR corresponding to CMR #1, the Differential L1-SINR corresponding to CMR #3 may be the difference relative to the L1-SINR corresponding to CMR #1, and the Differential L1-SINR corresponding to CMR #4 may be the difference relative to the L1-SINR corresponding to CMR #1.

Specifically, for example, the terminal device may report the identities of the K beam pairs and the L1-SINRs corresponding to the K beam pairs. Assuming K=4, the format of the information reported by the terminal device may be as shown in Table 3.

**Table 3**

| **CSI report number** | **CSI fields** |
|---|---|
| CSI report #n | Beam Pair #1, if reported |
| | Beam Pair #2, if reported |
| | Beam Pair #3, if reported |
| | Beam Pair #4, if reported |
| | L1-SINR corresponding to Beam Pair #1, if reported |
| | Differential L1-SINR corresponding to Beam Pair #2, if reported |
| | Differential L1-SINR corresponding to Beam Pair #3, if reported |
| | Differential L1-SINR corresponding to Beam Pair #4, if reported |

It is to be noted that in the above Table 3, the Differential L1-SINR corresponding to Beam Pair #2 may be the difference relative to the L1-SINR corresponding to Beam Pair #1, the Differential L1-SINR corresponding to Beam Pair #3 may be the difference relative to the L1-SINR corresponding to Beam Pair #1, and the Differential L1-SINR corresponding to Beam Pair #4 may be the difference relative to the L1-SINR corresponding to Beam Pair #1.

In some embodiments, in case of model prediction based on the reception beam, the terminal device does not need to report any information, and the network device does not need to make any indication. The terminal device only finds the reception beam having the best L1-SINR performance for a fixed transmission beam.

In some embodiments, the first communication device receives first indicative information. Here, the first indicative information is used to indicate identifier information of a used spatial filter in identifier information of the predicted K spatial filters.

Specifically, for example, the first communication device is the terminal device, that is, the terminal device receives the first indicative information from the network device. Specifically, after receiving the first prediction information from the terminal device, the network device may send the first indicative information to the terminal device.

In some embodiments, the first indicative information is at least one TCI state indicator. For example, the first indicative information is the TCI state field in the MAC CE and/or DCI.

In some embodiments, the first indicative information is at least one identifier field of a spatial filter. Specifically, the TCI state field in the MAC CE and/or DCI may be replaced with a new field identified by beam pairs. The advantage of such approach is that not only the downlink transmission beam used by the NW may be indicated, but also the reception beam, which should be used, may be directly indicated to the UE, instead of relying on the implementation of the reception beam by the UE.

In some embodiments, the first communication device is a network device.

In some embodiments, before the first communication device performs the prediction of a spatial filter in spatial domain based on the first network model, the first communication device receives second capability information. Here, the second capability information is used to indicate that a transmitting device of the second capability information supports the prediction of a spatial filter in spatial domain based on the L1-SINR. Optionally, the second capability information may also indicate that the transmitting device of the second capability information does not support the prediction of a spatial filter in spatial domain based on the L1-SINR. That is, the second capability information may indicate whether the transmitting device of the second capability information supports the prediction of a spatial filter in spatial domain based on the L1-SINR. For example, the second capability information occupies 1 bit, the value of 0 indicates that the prediction of a spatial filter in spatial domain based on the L1-SINR is supported, and the value of 1 indicates that the prediction of a spatial filter in spatial domain based on the L1-SINR is not supported. Alternatively, the second capability information occupies 1 bit, the value of 1 indicates that the prediction of a spatial filter in spatial domain based on the L1-SINR is supported, and the value of 0 indicates that the prediction of a spatial filter in spatial domain based on the L1-SINR is not supported.

Specifically, for example, before the network device performs the prediction of a spatial filter in spatial domain based on the first network model, the network device receives the second capability information from the terminal device. Here, the second capability information is used to indicate that the terminal device supports the prediction of a spatial filter in spatial domain based on the L1-SINR.

Specifically, before the network device configures the AI/ML model (i.e., the first network model) for the terminal device, the terminal device needs to inform the network device through terminal capability reporting whether it supports measurement and reporting of spatial domain beam (pair) prediction based on the L1-SINR.

In some embodiments, the second capability information further includes at least one of, but is not limited to:
the maximum number of reference signal resources included in the reference signal measurement set;
the maximum number of interference signal resources included in the interference signal measurement set;
whether the NZP CSI-RS resource is supported as the IMR;
the maximum number of NZP CSI-RS resources supported for measurement when the NZP CSI-RS resource is supported as the IMR;
whether the CSI-IM is supported as the IMR;
the maximum number of CSI-IMs supported for measurement when the CSI-IM is supported as the IMR; or
whether the power information of the reference signal part and the power information of the interference noise part are supported to be measured based on the reference signal measurement set.

Specifically, before the network device configures the AI/ML model (i.e., the first network model) for the terminal device, the terminal device needs to inform the network device through terminal capability reporting whether it supports measurement and reporting of spatial domain beam (pair) prediction based on the L1-SINR. If such characteristic is supported, capabilities reported by the terminal device include at least one of, but are not limited to:
the maximum number of SSB resources and/or CSI-RS resources that may be measured by the reference signal measurement set (Set B);
the maximum number of CSI-IM resources and/or NZP CSI-RS resources that may be measured by the interference signal measurement set (Set B');
whether the NZP CSI-RS is supported as the IMR; and the maximum number of NZP CSI-RS resources that may be measured if supported;
whether the CSI-IM is supported as the IMR; and the maximum number of CSI-IM resources that may be measured if supported; or
whether the CMR is supported to be used as the IMR (i.e., whether the power information of the reference signal part and the power information of the interference noise part are supported to be measured based on the reference signal measurement set (Set B)).

In some embodiments, before the first communication device performs the prediction of a spatial filter in spatial domain based on the first network model, the first communication device sends second information.

Here, the second information is used to configure at least one of: the reference signal measurement set, or the interference signal measurement set.

Alternatively, the second information is used to activate at least one of: a reference signal measurement set of pre-configured multiple reference signal measurement sets, or an interference signal measurement set of pre-configured multiple interference signal measurement sets.

Specifically, for example, the first communication device is the network device. That is, before the network device performs the prediction of a spatial filter in spatial domain based on the first network model, the network device sends the second information to the terminal device.

Specifically, the NW configures and/or activates the reference signal measurement set (Set B) and the interference signal measurement set (Set B') required for model input for the UE. The NW configures, through the RRC signaling, one or more groups of Set B and Set B' for the UE. As the reference signal measurement set, Set B may include an NZP CSI-RS resource and/or an SSB resource. As the interference signal measurement set, Set B' may include an NZP CSI-RS resource and/or a CSI-IM. Of course, Set B' may also not include any dedicated IMR, that is, the UE uses CMRs to measure interference and noise. If the NW configures multiple groups of Set B and Set B', the NW further needs to activate, through the MAC CE signaling, one group of Set B and Set B' of the multiple configured groups according to the actual deployment and antenna configuration. Otherwise, only the configured one group of Set B and Set B' is used.

In some embodiments, before the first communication device performs the prediction of a spatial filter in spatial domain based on the first network model, the first communication device receives the first measurement data set.

Specifically, for example, the first communication device is the network device. That is, before the network device performs the prediction of a spatial filter in spatial domain based on the first network model, the network device receives the first measurement data set from the terminal device.

In some embodiments, the power information of the reference signal part and/or the power information of the interference noise part is represented in a differential manner.

In some embodiments, the terminal device measures the CMRs in the reference signal measurement set (Set B), and correspondingly obtains the power information (e.g., the L1-RSRP) of the reference signal part (i.e., the S part) of the CMR. The terminal device reports the measurement results of the CMRs in Set B to the network device. Considering that the CMRs in Set B are configured by the network device, the terminal device reports according to the order configured by the network device, which may be taken as the input of the network-side model. For example, the configuration and reporting order of Set B may be as follows. Firstly, resource indices of the SSBs (if available, i.e., SSB Resource Indicator (SSBRI)) are sorted from low to high, and then resource indices of the NZP CSI-RSs (if available, i.e., CSI-RS Resource Indicator (CRI)) are sorted from low to high. Specifically, for example, the terminal device reports the measurement results of Set B, as shown in Tables 4 and 5.

**Table 4: Measurement & Reporting of CMRs in Set B (only including sorted L1-RSRP)**

| **CSI report number** | **CSI fields** |
|---|---|
| CSI report #n | L1-RSRP of SSBRI or CRI or beam pair #1 of CMR (in Set B) |
| | L1-RSRP of SSBRI or CRI or beam pair #2 of CMR (in Set B) |
| | ... |
| | L1-RSRP of SSBRI or CRI or beam pair #M of CMR (in Set B) |

**Table 5: Measurement & Reporting of CMRs in Set B (including beam (pair) indices and L1-RSRP)**

| **CSI report number** | **CSI fields** |
|---|---|
| CSI report #n Part #1 | CRI or SSBRI or beam pair #1 of CMR, if reported |
| | CRI or SSBRI or beam pair #2 of CMR, if reported |
| | ... |
| | CRI or SSBRI or beam pair #M of CMR, if reported |
| | L1-RSRP #1, if reported |
| | Differential L1-RSRP #2, if reported |
| | ... |
| | Differential L1-RSRP #M, if reported |

It is to be noted that in the above Table 5, the L1-RSRP corresponding to CRI or SSBRI or beam pair #1 of CMR is L1-RSRP #1, the L1-RSRP corresponding to CRI or SSBRI or beam pair #2 of CMR is Differential L1-RSRP #2, ..., and the L1-RSRP corresponding to CRI or SSBRI or beam pair #M of CMR is Differential L1-RSRP #M. Differential L1-RSRP #2 may be the difference relative to L1-RSRP #1, and Differential L1-RSRP #M may be the difference relative to L1-RSRP #1.

In the above Table 5, in addition to reporting the power of the reference signal part (in terms of L1-RSRP), the index of the CMR may also be reported. In this way, reporting based on differential RSRP may be supported, that is, the CMR having the highest RSRP is taken as the first index, and other CMRs having lower RSRP are differentially reported. The advantage of such approach is that reporting of the UE becomes very flexible, such that the UE has certain selection freedom in reporting.

In some embodiments, the terminal device measures the IMRs in the interference signal measurement set (Set B'). When a CMR is associated with an IMR, whether the measurement is based on the NZP CSI-RS or CSI-IM, the power of the interference noise part of the IMR is correspondingly obtained. The specific information format for the terminal device to report the measurement results may be referred to the reporting manners shown in Tables 6 or 7.

**Table 6: Measurement & Reporting of IMRs in Set B' (only including sorted L1-RSRP)**

| **CSI report number** | **CSI fields** |
|---|---|
| CSI report #n | L1-RSRP of CSI-IM index or CRI or beam pair #1 of IMR |
| | L1-RSRP of CSI-IM index or CRI or beam pair #2 of IMR |
| | ... |
| | L1-RSRP of CSI-IM index or CRI or beam pair #M of IMR |

**Table 7: Measurement & Reporting of IMRs in Set B' (including beam (pair) indices and L1-RSRP)**

| **CSI report number** | **CSI fields** |
|---|---|
| CSI report #n Part #1 | CRI or CSI-IM index or beam pair #1 of IMR if reported |
| | CRI or CSI-IM index or beam pair #2 of IMR if reported |
| | ... |
| | CRI or CSI-IM index or beam pair #M of IMR, if reported |
| | L1-RSRP #1, if reported |
| | Differential L1-RSRP #2, if reported |
| | ... |
| | Differential L1-RSRP #M, if reported |

It is to be noted that in the above Table 7, the L1-RSRP corresponding to CRI or CSI-IM or beam pair #1 of IMR is L1-RSRP #1, the L1-RSRP corresponding to CRI or CSI-IM or beam pair #2 of IMR is Differential L1-RSRP #2, ..., and the L1-RSRP corresponding to CRI or CSI-IM or beam pair #M of IMR is Differential L1-RSRP #M. Differential L1-RSRP #2 may be the difference relative to L1-RSRP #1, and Differential L1-RSRP #M may be the difference relative to L1-RSRP #1.

In some embodiments, when a CMR is associated with two IMRs, the terminal device reports NZP CSI-RS resources and CSI-IMs as measurement results of the IMRs. If there are M CMRs, there are 2M IMRs. The reporting order may be agreed upon, for example, the first half of the reporting format for the measurement results of NZP CSI-RS resources, and the second half for the measurement results of CSI-IMs, as shown in Tables 8 or 9.

**Table 8: Measurement & Reporting of NZP CSI-RSs and CSI-IMs in Set B' (only including sorted L1-RSRP)**

| **CSI report number** | **CSI fields** |
|---|---|
| CSI report #n | L1-RSRP of CRI or beam pair #1 of NZP CSI-RS (in Set B') |
| | L1-RSRP of CRI or beam pair #2 of NZP CSI-RS (in Set B') |
| | ... |
| | L1-RSRP of CRI or beam pair #M of NZP CSI-RS (in Set B') |
| CSI report #n | L1-RSRP of CSI-IM index #1 of CSI-IM (in Set B') |
| | L1-RSRP of CSI-IM index #2 of CSI-IM (in Set B') |
| | ... |
| | L1-RSRP of CSI-IM index #M of CSI-IM (in Set B') |

**Table 9: Measurement & Reporting of IMRs in Set B' (including beam (pair) indices and L1-RSRPs)**

| **CSI report number** | **CSI fields** |
|---|---|
| CSI report #n | CRI or beam pair #1 of NZP CSI-RS if reported |
| | CRI or beam pair #2 of NZP CSI-RS if reported |
| | ... |
| | CRI or beam pair #M of NZP CSI-RS, if reported |
| | NZP CSI-RS L1-RSRP #1, if reported |
| | NZP CSI-RS Differential L1-RSRP #2, if reported |
| | ... |
| | NZP CSI-RS Differential L1-RSRP #M, if reported |
| CSI report #n Part #1 | CSI-IM index #1 of CSI-IM if reported |
| | CSI-IM index #2 of CSI-IM if reported |
| | ... |
| | CSI-IM index #M of CSI-IM, if reported |
| | CSI-IM L1-RSRP #1, if reported |
| | CSI-IM Differential L1-RSRP #2, if reported |
| | ... |
| | CSI-IM Differential L1-RSRP #M, if reported |

It is to be noted that in the above Table 9, the L1-RSRP corresponding to CRI or beam pair #1 of NZP CSI-RS is NZP CSI-RS L1-RSRP #1, the L1-RSRP corresponding to CRI or beam pair #2 of NZP CSI-RS is NZP CSI-RS Differential L1-RSRP #2, ..., and the L1-RSRP corresponding to CRI or beam pair #M of NZP CSI-RS is NZP CSI-RS Differential L1-RSRP #M. NZP CSI-RS Differential L1-RSRP #2 may be the difference relative to NZP CSI-RS L1-RSRP #1, and NZP CSI-RS Differential L1-RSRP #M may be the difference relative to NZP CSI-RS L1-RSRP #1. The L1-RSRP corresponding to CSI-IM index #1 of CSI-IM is CSI-IM L1-RSRP #1, the L1-RSRP corresponding to CSI-IM index #2 of CSI-IM is CSI-IM Differential L1-RSRP #2, ..., and the L1-RSRP corresponding to CSI-IM index #M of CSI-IM is CSI-IM Differential L1-RSRP #M. CSI-IM Differential L1-RSRP #2 may be the difference relative to CSI-IM L1-RSRP #1, and CSI-IM Differential L1-RSRP #M may be the difference relative to CSI-IM L1-RSRP #1.

In some embodiments, the measurement results of CMRs and IMRs may be reported to the network device together in one report, as shown in Tables 10 or 11. It is to be noted that in Table 11, considering that the interference and noise power measured from different IMR resources, such as the NZP CSI-RS and CSI-IM, may differ significantly and exceed the range of differential quantization, a "( )" is added to "Differential", which represents that differential reporting and non-differential reporting are supported.

**Table 10: Measurement & Reporting of CMRs in Set B and IMRs in Set B' (only including sorted L1-RSRPs)**

| **CSI report number** | **CSI fields** |
|---|---|
| CSI report #n | RSRP of SSBRI or CRI or beam pair #1 of CMR (in Set B) |
| | RSRP of SSBRI or CRI or beam pair #2 of CMR (in Set B) |
| | ... |
| | RSRP of SSBRI or CRI or beam pair #M of CMR (in Set B) |
| CSI report #n | RSRP of CRI or beam pair #1 of IMR (in Set B') |
| | RSRP of CRI or beam pair #2 of IMR (in Set B') |
| | ... |
| | RSRP of CRI or beam pair #M of IMR (in Set B') |

**Table 11: Measurement & Reporting of CMRs in Set B (including beam (pair) indices and L1-RSRPs)**

| **CSI report number** | **CSI fields** |
|---|---|
| CSI report #n Part #1 | CRI or SSBRI or beam pair #1 of CMR if reported |
| | CRI or SSBRI or beam pair #2 of CMR if reported |
| | ... |
| | CRI or SSBRI or beam pair #M of CMR, if reported |
| | RSRP #1 of CMR, if reported |
| | Differential RSRP #2 of CMR, if reported |
| | ... |
| | Differential RSRP #M of CMR, if reported |
| CSI report #n Part #1 | CRI or CSI-IM index or beam pair #1 of IMR if reported |
| | CRI or CSI-IM index or beam pair #2 of IMR if reported |
| | ... |
| | CRI or CSI-IM index or beam pair #M of IMR, if reported |
| | RSRP #1 of IMR, if reported |
| | (Differential) RSRP #2 of IMR, if reported |
| | ... |
| | (Differential) RSRP #M of IMR, if reported |

In some embodiments, when the network device does not configure the IMR for the CMR, it is considered to separate the power of the reference signal part and the power of the interference noise signal part, and then report to the network device, as shown in Tables 12 or 13.

**Table 12: Reporting of power of the reference signal and power of the interference & noise signal of CMRs in Set B (only including sorted L1-RSRP)**

| **CSI report number** | **CSI fields** |
|---|---|
| CSI report #n | Signal RSRP of SSBRI or CRI or beam pair #1 of CMR |
| | Signal RSRP of SSBRI or CRI or beam pair #2 of CMR |
| | ... |
| | Signal RSRP of SSBRI or CRI or beam pair #M of CMR |
| CSI report #n | Interference and noise RSRP of SSBRI or CRI or beam pair #1 of CMR |
| | Interference and noise RSRP of SSBRI or CRI or beam pair #2 of CMR |
| | ... |
| | Interference and noise RSRP of SSBRI or CRI or beam pair #M of CMR |

**Table 13: Reporting of power of the reference signal and power of the interference & noise signal of CMRs in Set B (including beam (pair) indices and L1-RSRP)**

| **CSI report number** | **CSI fields** |
|---|---|
| CSI report #n Part #1 | CRI or SSBRI or beam pair #1 of CMR if reported |
| | CRI or SSBRI or beam pair #2 of CMR if reported |
| | ... |
| | CRI or SSBRI or beam pair #M of CMR, if reported |
| | Signal RSRP #1 of CMR, if reported |
| | Differential Signal RSRP #2 of CMR, if reported |
| | ... |
| | Differential Signal RSRP #M of CMR, if reported |
| CSI report #n Part #1 | CRI or SSBRI or beam pair #1 of CMR if reported |
| | CRI or SSBRI or beam pair #2 of CMR if reported |
| | ... |
| | CRI or SSBRI or beam pair #M of CMR, if reported |
| | Interference and noise RSRP #1 of CMR, if reported |
| | Differential Interference and noise RSRP #2 of CMR, if reported |
| | ... |
| | Differential Interference and noise RSRP #M of CMR, if reported |

In some embodiments, as shown in FIG. 12, the first communication device is the network device, the CMRs in the M CMRs (Set B) have a one-to-one association relationship with the IMRs in the M IMRs (Set B'), and the first network model is AI/ML model 1. Specifically, as shown in FIG. 12, the network device may take the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') as the input of AI/ML model 1 (which predicts information of the Top-K beams (beam pairs)). Specifically, the terminal device measures the CMRs to obtain the power of the reference signal part (i.e., the S part), and measures the IMRs to obtain the power of the interference noise part (i.e., the (I+N) part). The terminal device reports the measurement results to the network device. The output of AI/ML model 1 is the optimal K beams (beam pairs) (based on the predicted L1-SINRs sorted from high to low) inferred from the reference signal prediction set (Set A) and the interference signal prediction set (Set A').

In some embodiments, as shown in FIG. 13, the first communication device is the network device, the CMRs in the M CMRs (Set B) have a one-to-one association relationship with the IMRs in the M IMRs (Set B'), and the first network model is AI/ML model 2. Specifically, as shown in FIG. 13, the network device may take the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') as the input of AI/ML model 2 (which predicts L1-SINRs corresponding to the Top-K beams (beam pairs)). Specifically, the terminal device measures the CMRs to obtain the power of the reference signal part (i.e., the S part), and measures the IMRs to obtain the power of the interference noise part (i.e., the (I+N) part). The terminal device reports the measurement results to the network device. The output of AI/ML model 2 is the L1-SINR values corresponding to the optimal K beams (beam pairs) inferred from the reference signal prediction set (Set A) and the interference signal prediction set (Set A').

In some embodiments, as shown in FIG. 14, the first communication device is the network device, and the CMRs in the M CMRs (Set B) have a one-to-two association relationship with the IMRs in the 2M IMRs (Set B'). Here, one of the two IMRs corresponding to a CMR is an NZP CSI-RS, and the other one is a CSI-IM. The first network model is AI/ML Model 3. Specifically, as shown in FIG. 14, the network device may take the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') as the input of AI/ML model 3 (which predicts information of the Top-K beams (beam pairs)). Specifically, the terminal device measures the CMRs to obtain the power of the reference signal part (i.e., the S part), and measures the IMRs to obtain the power of the interference noise part (i.e., the (I+N) part). The terminal device reports the measurement results to the network device. The output of AI/ML model 3 is the optimal K beams (beam pairs) (based on the predicted L1-SINRs sorted from high to low) inferred from the reference signal prediction set (Set A) and the interference signal prediction set (Set A').

In some embodiments, as shown in FIG. 15, the first communication device is the network device, and the CMRs in the M CMRs (Set B) have a one-to-two association relationship with the IMRs in the 2M IMRs (Set B'). Here, one of the two IMRs corresponding to a CMR is an NZP CSI-RS, and the other one is a CSI-IM. The first network model is AI/ML model 4. Specifically, as shown in FIG. 15, the network device may take the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the IMRs in the interference signal measurement set (Set B') as the input of AI/ML model 4 (which predicts L1-SINRs corresponding to the Top-K beams (beam pairs)). Specifically, the terminal device measures the CMRs to obtain the power of the reference signal part (i.e., the S part), and measures the IMRs to obtain the power of the interference noise part (i.e., the (I+N) part). The terminal device reports the measurement results to the network device. The output of AI/ML model 4 is the L1-SINR values corresponding to the optimal K beams (beam pairs) inferred from the reference signal prediction set (Set A) and the interference signal prediction set (Set A').

In some embodiments, as shown in FIG. 16, the first communication device is the network device, and the network device configures M CMRs (Set B) but does not configure any IMR (Set B'). The first network model is AI/ML Model 5. Specifically, as shown in FIG. 16, the network device may take the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the CMRs in the reference signal measurement set (Set B) as the input of AI/ML model 5 (which predicts information of the Top-K beams (beam pairs)). Specifically, the terminal device measures the CMRs to obtain the power of the reference signal part (i.e., the S part), and measures the CMRs to obtain the power of the interference noise part (i.e., the (I+N) part). Specifically, the terminal device needs to pre-process measurements of the CMRs to separate the power of the S part of the reference signal and the power of the interference noise (I+N) part of the reference signal. The terminal device reports the measurement results to the network device. The output of AI/ML Model 5 is the optimal K beams (beam pairs) (based on the predicted L1-SINRs sorted from high to low) inferred from the reference signal prediction set (Set A).

In some embodiments, as shown in FIG. 17, the first communication device is the network device, and the network device configures M CMRs (Set B) but does not configure any IMR (Set B'). The first network model is AI/ML model 6. Specifically, as shown in FIG. 17, the network device may take the power information (e.g., the L1-RSRP) of the reference signal part (i.e., the S part) measured based on the CMRs in the reference signal measurement set (Set B) and the power information (e.g., the L1-RSRP) of the interference noise part (i.e., the (I+N) part) measured based on the CMRs in the reference signal measurement set (Set B) as the input of AI/ML model 6 (which predicts L1-SINRs corresponding to the Top-K beams (beam pairs)). Specifically, the terminal device measures the CMRs to obtain the power of the reference signal part (i.e., the S part), and measures the CMRs to obtain the power of the interference noise part (i.e., the (I+N) part). Specifically, the terminal device needs to pre-process measurements of the CMRs to separate the power of the S part of the reference signal and the power of the interference noise (I+N) part of the reference signal. The terminal device reports the measurement results to the network device. The output of AI/ML model 6 is the L1-SINR values corresponding to the optimal K beams (beam pairs) inferred from the reference signal prediction set (Set A).

In some embodiments, the first communication device sends second indicative information. Here, the second indicative information is used to indicate identifier information of a used spatial filter in identifier information of the predicted K spatial filters.

Specifically, the first communication device is the network device. That is, the network device sends the second indicative information to the terminal device. Specifically, after predicting the first prediction data set, the network device may send the second indicative information to the terminal device.

In some embodiments, the second indicative information is at least one TCI state indicator; or
the second indicative information is at least one identifier field of a spatial filter.

Therefore, in the embodiments of the disclosure, the first communication device may input the measured power information of the reference signal part and the measured power information of the interference noise part into the first network model, so as to predict the identifier information of K spatial filters and/or the L1-SINRs corresponding to the K spatial filters. In other words, the interference between beams (beam pairs) may be reflected in AI/ML model-based beam (pair) prediction, thereby improving the performance of the beam management system.

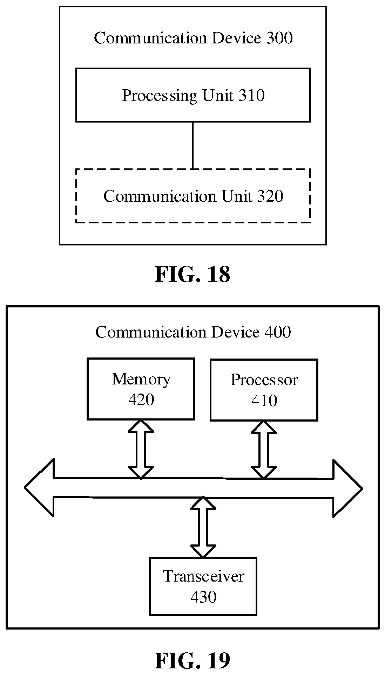

The method embodiments of the disclosure are described above in detail in combination with FIG. 11 to FIG. 17, and apparatus embodiments of the disclosure are described below in detail in combination with FIG. 18 to FIG. 21. It is to be understood that the apparatus embodiments correspond to the method embodiments, and similar description may be referred to the method embodiments.

FIG. 18 illustrates a schematic block diagram of a communication device 300 according to an embodiment of the disclosure. The communication device 300 is a first communication device. As shown in FIG. 18, the communication device 300 includes a processing unit 310.

The processing unit 310 is configured to input a first measurement data set into a first network model, and output a first prediction data set.

Here, the first measurement data set includes at least one of: power information of a reference signal part measured based on a reference signal measurement set and power information of an interference noise part measured based on the reference signal measurement set, or identifier information of a spatial filter measured based on the reference signal measurement set. Or the first measurement data set includes at least one of: the power information of the reference signal part measured based on the reference signal measurement set and power information of the interference noise part measured based on an interference signal measurement set, the identifier information of the spatial filter measured based on the reference signal measurement set, or identifier information of the spatial filter measured based on the interference signal measurement set.

Here, the first prediction data set includes at least one of: identifier information of K spatial filters predicted from a reference signal prediction set, identifier information of K spatial filters predicted from an interference signal prediction set, or Predicted L1-SINRs corresponding to K spatial filters. Here, K is a positive integer.

In some embodiments, the reference signal measurement set includes M CMRs; and/or the interference signal measurement set includes M IMRs, or the interference signal measurement set includes 2M IMRs; and/or
the reference signal prediction set includes N CMRs; and/or the interference signal prediction set includes N IMRs, or the interference signal prediction set includes 2N IMRs.

Here, M and N are positive integers, and M < N.

In some embodiments, there is a one-to-one association relationship between CMRs in the M CMRs and IMRs in the M IMRs; or there is a one-to-two association relationship between the CMRs in the M CMRs and IMRs in the 2M IMRs.

In some embodiments, the M CMRs include at least one of: an NZP CSI-RS resource, or an SSB resource; and/or
the M IMRs include at least one of: the NZP CSI-RS resource, or a CSI-IM; or the 2M IMRs include at least one of: the NZP CSI-RS resource, or the CSI-IM.

In some embodiments, there is a one-to-one association relationship between CMRs in the N CMRs and IMRs in the N IMRs; or there is a one-to-two association relationship between the CMRs in the N CMRs and IMRs in the 2N IMRs.

In some embodiments, the N CMRs include at least one of: an NZP CSI-RS resource, or an SSB resource; and/or the N IMRs include at least one of: the NZP CSI-RS resource, or a CSI-IM; or the 2N IMRs include at least one of: the NZP CSI-RS resource, or the CSI-IM.

In some embodiments, a CMR and an IMR, which have an association relationship, have the same QCL type D assumption.

In some embodiments, 4M = N, or 8M = N.

In some embodiments, the first measurement data set is measured by the first communication device, or the first measurement data set is measured by another device and reported to the first communication device.

In some embodiments, before the first communication device performs prediction of a spatial filter in spatial domain based on the first network model, the communication device 300 further includes a communication unit 320.

The communication unit 320 is configured to send first capability information. Here, the first capability information is used to indicate that the first communication device supports prediction of a spatial filter in spatial domain based on an L1-SINR.

In some embodiments, the first capability information further includes at least one of:
the maximum number of reference signal resources included in the reference signal measurement set;
the maximum number of interference signal resources included in the interference signal measurement set;
whether an NZP CSI-RS resource is supported as an IMR;
the maximum number of NZP CSI-RS resources supported for measurement when the NZP CSI-RS resource is supported as the IMR;
whether a CSI-IM is supported as the IMR;
the maximum number of CSI-IMs supported for measurement when the CSI-IM is supported as the IMR;
whether power information of the reference signal part and power information of the interference noise part are supported to be measured based on the reference signal measurement set;
the maximum size of the reference signal prediction set;
the maximum size of the interference signal prediction set; or
the maximum value of K.

In some embodiments, before the first communication device performs the prediction of a spatial filter in spatial domain based on the first network model, the communication device 300 further includes the communication unit 320.

The communication unit 320 is configured to receive first information.

Here, the first information is used to configure at least one of: the reference signal measurement set, the interference signal measurement set, the reference signal prediction set, or the interference signal prediction set; or
the first information is used to activate at least one of: a reference signal measurement set of pre-configured multiple reference signal measurement sets, an interference signal measurement set of pre-configured multiple interference signal measurement sets, a reference signal prediction set of pre-configured multiple reference signal prediction sets, or an interference signal prediction set of pre-configured multiple interference signal prediction sets.

In some embodiments, the communication device 300 further includes the communication unit 320.

The communication unit 320 is configured to send first prediction information.

Here, the first prediction information includes part or all of contents of the first prediction data set.

In some embodiments, when the first prediction information includes at least the Predicted L1-SINRs corresponding to the K spatial filters, the L1-SINRs corresponding to the K spatial filters are represented in a differential manner.

In some embodiments, the communication unit 320 is further configured to receive first indicative information. Here, the first indicative information is used to indicate identifier information of a used spatial filter in identifier information of the predicted K spatial filters.

In some embodiments, the first indicative information is at least one TCI state indicator; or
the first indicative information is at least one identifier field of a spatial filter.

In some embodiments, the first communication device is a terminal device.

In some embodiments, before the first communication device performs the prediction of a spatial filter in spatial domain based on the first network model, the communication device 300 further includes the communication unit 320.

The communication unit 320 is configured to receive second capability information. Here, the second capability information is used to indicate that a transmitting device of the second capability information supports prediction of a spatial filter in spatial domain based on the L1-SINR.

In some embodiments, the second capability information further includes at least one of:
the maximum number of reference signal resources included in the reference signal measurement set;
the maximum number of interference signal resources included in the interference signal measurement set;
whether an NZP CSI-RS resource is supported as an IMR;
the maximum number of NZP CSI-RS resources supported for measurement when the NZP CSI-RS resource is supported as the IMR;
whether a CSI-IM is supported as the IMR;
the maximum number of CSI-IMs supported for measurement when the CSI-IM is supported as the IMR; or
whether power information of the reference signal part and power information of the interference noise part are supported to be measured based on the reference signal measurement set.

In some embodiments, before the first communication device performs the prediction of a spatial filter in spatial domain based on the first network model, the communication device 300 further includes the communication unit 320.

The communication unit 320 is configured to send second information.

Here, the second information is used to configure at least one of: the reference signal measurement set, or the interference signal measurement set; or
the second information is used to activate at least one of: a reference signal measurement set of pre-configured multiple reference signal measurement sets, or an interference signal measurement set of pre-configured multiple interference signal measurement sets.

In some embodiments, before the first communication device performs the prediction of a spatial filter in spatial domain based on the first network model, the communication device 300 further includes the communication unit 320.

The communication unit 320 is configured to receive the first measurement data set.

In some embodiments, power information of the reference signal part and/or power information of the interference noise part is represented in a differential manner.

In some embodiments, the communication device 300 further includes the communication unit 320.

The communication unit 320 is configured to send second indicative information. Here, the second indicative information is used to indicate identifier information of a used spatial filter in identifier information of the predicted K spatial filters.

In some embodiments, the second indicative information is at least one TCI state indicator; or
the second indicative information is at least one identifier field of a spatial filter.

In some embodiments, the first communication device is a network device.

In some embodiments, the first network model is determined by the first communication device, or the first network model is configured or indicated by another device.

In some embodiments, the spatial filter includes a transmit spatial filter; or
the spatial filter includes a receive spatial filter; or
the spatial filter includes a transmit spatial filter and a receive spatial filter.

In some embodiments, the above communication unit may be a communication interface or a transceiver, or an input/output interface of a communication chip or a system-on-chip. The above processing unit may be one or more processors.

It is to be understood that the communication device 300 according to the embodiments of the disclosure may correspond to the first communication device in the method embodiments of the disclosure, and the above and other operations and/or functions of the various units in the communication device 300 are respectively for the purpose of implementing corresponding flows of the first communication device in the method 200 shown in FIG. 11, which is not repeated here for the sake of brevity.

FIG. 19 is a schematic diagram of a structure of a communication device 400 provided by an embodiment of the disclosure. The communication device 400 shown in FIG. 19 includes a processor 410, and the processor 410 may call and run a computer program in a memory to implement the methods in the embodiments of the disclosure.

In some embodiments, as shown in FIG. 19, the communication device 400 may further include a memory 420. The processor 410 may call and run a computer program in the memory 420 to implement the methods in the embodiments of the disclosure.

The memory 420 may be a separate component independent of the processor 410, or may be integrated in the processor 410.

In some embodiments, as shown in FIG. 19, the communication device 400 may further include a transceiver 430. The processor 410 may control the transceiver 430 to communicate with other devices, specifically, to send information or data to other devices, or to receive information or data from other devices.

Here, the transceiver 430 may include a transmitter and a receiver. The transceiver 430 may further include antennas. The number of the antennas may be one or more.

In some embodiments, the processor 410 may implement functions of the processing unit in the first communication device, which is not repeated here for the sake of brevity.

In some embodiments, the transceiver 430 may implement functions of the communication unit in the first communication device, which is not repeated here for the sake of brevity.

In some embodiments, the communication device 400 may specifically be the first communication device in the embodiments of the disclosure, and the communication device 400 may implement corresponding flows implemented by the first communication device in each method of the embodiments of the disclosure, which is not repeated here for the sake of brevity.

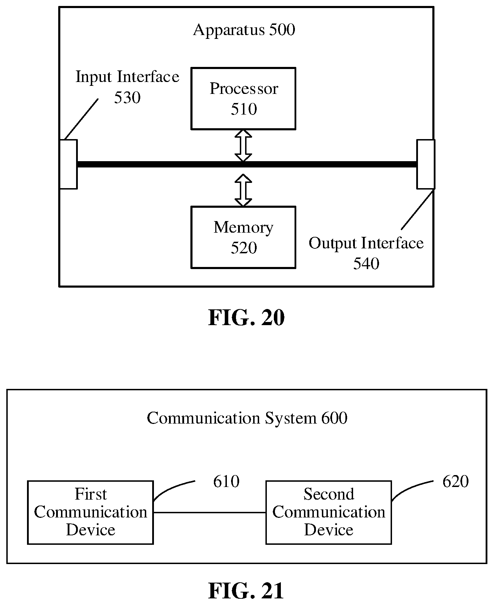

FIG. 20 is a schematic diagram of a structure of an apparatus of an embodiment of the disclosure. The apparatus 500 shown in FIG. 20 includes a processor 510. The processor 510 may call and run a computer program in a memory to implement the methods in the embodiments of the disclosure.

In some embodiments, as shown in FIG. 20, the apparatus 500 may further include a memory 520. The processor 510 may call and run a computer program in the memory 520 to implement the methods in the embodiments of the disclosure.

The memory 520 may be a separate component independent of the processor 510, or may be integrated in the processor 510.

In some embodiments, the processor 510 may implement functions of the processing unit in the first communication device, which is not repeated here for the sake of brevity.

In some embodiments, the apparatus 500 may further include an input interface 530. The processor 510 may control the input interface 530 to communicate with other devices or chips, specifically, to acquire information or data from other devices or chips. Optionally, the processor 510 may be located within or outside of the chip.

In some embodiments, the input interface 530 may implement functions of the communication unit in the first communication device.

In some embodiments, the apparatus 500 may further include an output interface 540. The processor 510 may control the output interface 540 to communicate with other devices or chips, specifically, to output information or data to other devices or chips. Optionally, the processor 510 may be located within or outside of the chip.

In some embodiments, the output interface 540 may implement functions of the communication unit in the first communication device.

In some embodiments, the apparatus may be applied to the first communication device in the embodiments of the disclosure, and the apparatus may implement corresponding flows implemented by the first communication device in each method of the embodiments of the disclosure, which is not repeated here for the sake of brevity.

In some embodiments, the apparatus referred to in the embodiments of the disclosure may also be a chip. For example, it may be a system-level chip, a system chip, a chip system, a system-on-chip, or the like.

FIG. 21 is a schematic block diagram of a communication system 600 provided by an embodiment of the disclosure. As shown in FIG. 21, the communication system 600 includes a first communication device 610 and a second communication device 620.

Here, the first communication device 610 may be configured to implement corresponding functions implemented by the first communication device in the above methods, which is not repeated here for the sake of brevity.

It is to be understood that the processor in the embodiments of the disclosure may be an integrated circuit chip with a signal processing capability. In an implementation process, various operations in the above method embodiments may be completed by a hardware integrated logic circuit or instructions in the form of software in the processor. The above processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. Various methods, operations and logic block diagrams disclosed in the embodiments of the disclosure may be implemented or executed. The general purpose processor may be a microprocessor, or the processor may be any conventional processor or the like. Operations in combination with methods disclosed in the embodiments of the disclosure may be directly embodied to be executed and completed by a hardware decoding processor, or by a combination of hardware and software modules in the decoding processor. The software module may be located in a mature storage medium in the art, such as a Random Access Memory, a flash memory, a Read-Only Memory, a Programmable Read-Only Memory, an Electrically Erasable Programmable Memory, a register, or the like. The storage medium is located in the memory, and the processor reads the information in the memory to complete the operations of the above methods in combination with its hardware.

It is to be understood that the memory in the embodiments of the disclosure may be a volatile memory or a non-volatile memory, or may include a volatile memory and a non-volatile memory. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), and is used as an external high-speed cache. It is exemplarily but unlimitedly illustrated that RAMs in various forms may be used, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), or a Direct Rambus RAM (DR RAM). It is to be noted that the memory of the systems and methods described herein is intended to include memories of these and any other proper types, but is not limited thereto.

It is to be understood that the above memory is exemplarily but unlimitedly illustrated. For example, the memory in the embodiments of the disclosure may further be an SRAM, a DRAM, an SDRAM, a DDR SDRAM, an ESDRAM, an SLDRAM, a DR RAM, or the like. That is to say, the memory in the embodiments of the disclosure is intended to include memories of these and any other proper types, but is not limited thereto.

An embodiment of the disclosure further provides a computer-readable storage medium configured to store a computer program.

In some embodiments, the computer-readable storage medium may be applied to the first communication device in the embodiments of the disclosure, and the computer program enables a computer to execute corresponding flows implemented by the first communication device in each method of the embodiments of the disclosure, which is not repeated here for the sake of brevity.

An embodiment of the disclosure further provides a computer program product, which includes computer program instructions.

In some embodiments, the computer program product may be applied to the first communication device in the embodiments of the disclosure, and the computer program instructions enable a computer to execute corresponding flows implemented by the first communication device in each method of the embodiments of the disclosure, which is not repeated here for the sake of brevity.

An embodiment of the disclosure further provides a computer program.

In some embodiments, the computer program may be applied to the first communication device in the embodiments of the disclosure, and the computer program, when run on a computer, enables the computer to execute corresponding flows implemented by the first communication device in each method of the embodiments of the disclosure, which is not repeated here for the sake of brevity.

Those of ordinary skill in the art may realize that units and algorithm steps of each example described in combination with the embodiments disclosed herein may be implemented by electronic hardware, or a combination of computer software and electronic hardware. Whether these functions are executed in a hardware or software manner depends on specific applications and design constraints of the technical solutions. Professionals may implement the described functions for each specific application by using different methods, but such implementation shall not be regarded as outside the scope of the disclosure.

Those skilled in the art may clearly understand that for convenient and brief description, specific operation processes of the systems, apparatuses and units described above may be referred to corresponding processes in the above method embodiments and will not be repeated here.

In several embodiments provided by the disclosure, it is to be understood that the disclosed systems, apparatuses and methods may be implemented in other manners. For example, the apparatus embodiments described above are only schematic. For example, division of the units is only a kind of logic function division, and other division manners may be adopted during a practical implementation. For example, multiple units or components may be combined or integrated into another system, or some features may be neglected or not executed. In addition, coupling or direct coupling or communication connection between various displayed or discussed components may be indirect coupling or communication connection through some interfaces, apparatuses or units, and may be electrical, mechanical, or in other forms.

Units described as separate components may or may not be physically separated, and components displayed as units may or may not be physical units, that is, may be located in the same place, or may also be distributed to multiple network units. Part or all of the units may be selected according to a practical requirement to implement the purpose of the solutions of the embodiments.

In addition, various function units in various embodiments of the disclosure may be integrated into a processing unit, or each unit may physically exist independently, or two or more than two units may be integrated into a unit.

When implemented in form of a software function unit and sold or used as an independent product, the functions may be stored in a computer-readable storage medium. Based on such understanding, the technical solution of the disclosure substantially or parts making contributions to the related art or part of the technical solution may be embodied in form of a software product. The computer software product is stored in a storage medium, including several instructions for enabling a computer device (which may be a personal computer, a server, a network device, or the like) to execute all or part of the operations of the methods in various embodiments of the disclosure. The above storage medium includes various media capable of storing program codes, such as a USB disk, a mobile hard disk, a ROM, a RAM, a magnetic disk, an optical disk, or the like.

The above are only specific implementations of the disclosure, but the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A wireless communication method, comprising:
inputting, by a first communication device, a first measurement data set into a first network model, and outputting a first prediction data set;
wherein the first measurement data set comprises at least one of: power information of a reference signal part measured based on a reference signal measurement set and power information of an interference noise part measured based on the reference signal measurement set, or identifier information of a spatial filter measured based on the reference signal measurement set; or the first measurement data set comprises at least one of: the power information of the reference signal part measured based on the reference signal measurement set and power information of the interference noise part measured based on an interference signal measurement set, the identifier information of the spatial filter measured based on the reference signal measurement set, or identifier information of the spatial filter measured based on the interference signal measurement set;
wherein the first prediction data set comprises at least one of: identifier information of K spatial filters predicted from a reference signal prediction set, identifier information of K spatial filters predicted from an interference signal prediction set, or predicted Layer1 Signal to Interference plus Noise Ratios (L1-SINRs) corresponding to K spatial filters; wherein K is a positive integer.

2. The method of claim 1, wherein
the reference signal measurement set comprises M Channel Measurement Resources (CMRs); and/or the interference signal measurement set comprises M Interference Measurement Resources (IMRs), or the interference signal measurement set comprises 2M IMRs; and/or
the reference signal prediction set comprises N CMRs; and/or the interference signal prediction set comprises N IMRs, or the interference signal measurement set comprises 2N IMRs;
wherein M and N are positive integers, and M < N.

3. The method of claim 2, wherein
there is a one-to-one association relationship between CMRs in the M CMRs and IMRs in the M IMRs; or
there is a one-to-two association relationship between the CMRs in the M CMRs and IMRs in the 2M IMRs.

4. The method of claim 2 or 3, wherein
the M CMRs comprise at least one of: a Non-Zero Power Channel State Information-Reference Signal (NZP CSI-RS) resource, or a Synchronization Signal Block (SSB) resource; and/or
the M IMRs comprise at least one of: the NZP CSI-RS resource, or a Channel State Information Interference Resource (CSI-IM); or the 2M IMRs comprise at least one of: the NZP CSI-RS resource, or the CSI-IM.

5. The method of claim 2, wherein
there is a one-to-one association relationship between CMRs in the N CMRs and IMRs in the N IMRs; or
there is a one-to-two association relationship between the CMRs in the N CMRs and IMRs in the 2N IMRs.

6. The method of claim 2 or 5, wherein
the N CMRs comprise at least one of: a Non-Zero Power Channel State Information-Reference Signal (NZP CSI-RS) resource, or a Synchronization Signal Block (SSB) resource; and/or
the N IMRs comprise at least one of: the NZP CSI-RS resource, or a Channel State Information Interference Resource (CSI-IM); or the 2N IMRs comprise at least one of: the NZP CSI-RS resource, or the CSI-IM.

7. The method of claim 3 or 5, wherein
a CMR and an IMR, which have an association relationship, have a same Quasi-co-located (QCL) type D assumption.

8. The method of any one of claims 2 to 7, wherein
4M = N, or 8M = N.

9. The method of any one of claims 1 to 8, wherein
the first measurement data set is measured by the first communication device, or the first measurement data set is measured by another device and reported to the first communication device.

10. The method of any one of claims 1 to 9, wherein before the first communication device performs prediction of a spatial filter in spatial domain based on the first network model, the method further comprises:
sending, by the first communication device, first capability information; wherein the first capability information is used to indicate that the first communication device supports the prediction of the spatial filter in the spatial domain based on an L1-SINR.

11. The method of claim 10, wherein
the first capability information further comprises at least one of:
a maximum number of reference signal resources comprised in the reference signal measurement set;
a maximum number of interference signal resources comprised in the interference signal measurement set;
whether a Non-Zero Power Channel State Information-Reference Signal (NZP CSI-RS) resource is supported as an Interference Measurement Resource (IMR);
a maximum number of NZP CSI-RS resources supported for measurement when the NZP CSI-RS resource is supported as the IMR;
whether a Channel State Information Interference Resource (CSI-IM) is supported as the IMR;
a maximum number of CSI-IMs supported for measurement when the CSI-IM is supported as the IMR;
whether power information of the reference signal part and power information of the interference noise part are supported to be measured based on the reference signal measurement set;
a maximum size of the reference signal prediction set;
a maximum size of the interference signal prediction set; or
a maximum value of K.

12. The method of any one of claims 1 to 11, wherein before the first communication device performs prediction of a spatial filter in spatial domain based on the first network model, the method further comprises:
receiving, by the first communication device, first information;
wherein the first information is used to configure at least one of: the reference signal measurement set, the interference signal measurement set, the reference signal prediction set, or the interference signal prediction set; or
the first information is used to activate at least one of: the reference signal measurement set of pre-configured plurality of reference signal measurement sets, the interference signal measurement set of pre-configured plurality of interference signal measurement sets, the reference signal prediction set of pre-configured plurality of reference signal prediction sets, or the interference signal prediction set of pre-configured plurality of interference signal prediction sets.

13. The method of any one of claims 1 to 12, further comprising:
sending, by the first communication device, first prediction information;
wherein the first prediction information comprises part or all of contents of the first prediction data set.

14. The method of claim 13, wherein
when the first prediction information comprises at least the predicted L1-SINRs corresponding to the K spatial filters, the L1-SINRs corresponding to the K spatial filters are represented in a differential manner.

15. The method of claim 13 or 14, further comprising:
receiving, by the first communication device, first indicative information; wherein the first indicative information is used to indicate identifier information of a used spatial filter in identifier information of the predicted K spatial filters.

16. The method of claim 15, wherein
the first indicative information is at least one Transmission Configuration Indicator (TCI) state indicator; or
the first indicative information is at least one identifier field of a spatial filter.

17. The method of any one of claims 1 to 16, wherein
the first communication device is a terminal device.

18. The method of any one of claims 1 to 9, wherein before the first communication device performs the prediction of the spatial filter in the spatial domain based on the first network model, the method further comprises:
receiving, by the first communication device, second capability information; wherein the second capability information is used to indicate that a transmitting device of the second capability information supports prediction of a spatial filter in spatial domain based on an L1-SINR.

19. The method of claim 18, wherein
the second capability information further comprises at least one of:
a maximum number of reference signal resources comprised in the reference signal measurement set;
a maximum number of interference signal resources comprised in the interference signal measurement set;
whether a Non-Zero Power Channel State Information-Reference Signal (NZP CSI-RS) resource is supported as an Interference Measurement Resource (IMR);
a maximum number of NZP CSI-RS resources supported for measurement when the NZP CSI-RS resource is supported as the IMR;
whether a Channel State Information Interference Resource (CSI-IM) is supported as the IMR;
a maximum number of CSI-IMs supported for measurement when the CSI-IM is supported as the IMR; or
whether power information of the reference signal part and power information of the interference noise part are supported to be measured based on the reference signal measurement set.

20. The method of any one of claims 1 to 9 and 18 to 19, wherein before the first communication device performs the prediction of the spatial filter in the spatial domain based on the first network model, the method further comprises:
sending, by the first communication device, second information;
wherein the second information is used to configure at least one of: the reference signal measurement set, or the interference signal measurement set; or
the second information is used to activate at least one of: the reference signal measurement set of pre-configured plurality of reference signal measurement sets, or the interference signal measurement set of pre-configured plurality of interference signal measurement sets.

21. The method of any one of claims 1 to 9 and 18 to 20, wherein before the first communication device performs prediction of a spatial filter in spatial domain based on the first network model, the method further comprises:
receiving, by the first communication device, the first measurement data set.

22. The method of claim 21, wherein
power information of the reference signal part and/or power information of the interference noise part is represented in a differential manner.

23. The method of any one of claims 1 to 9 and 18 to 22, further comprising:
sending, by the first communication device, second indicative information; wherein the second indicative information is used to indicate identifier information of a used spatial filter in identifier information of the predicted K spatial filters.

24. The method of claim 23, wherein
the second indicative information is at least one Transmission Configuration Indicator (TCI) state indicator; or
the second indicative information is at least one identifier field of a spatial filter.

25. The method of any one of claims 1 to 9 and 18 to 24, wherein
the first communication device is a network device.

26. The method of any one of claims 1 to 25, wherein
the first network model is determined by the first communication device, or the first network model is configured or indicated by another device.

27. The method of any one of claims 1 to 26, wherein
the spatial filter comprises a transmit spatial filter; or
the spatial filter comprises a receive spatial filter; or
the spatial filter comprises a transmit spatial filter and a receive spatial filter.

28. A communication device, wherein the communication device is a first communication device, the communication device comprises:
a processing unit, configured to input a first measurement data set into a first network model, and output a first prediction data set;
wherein the first measurement data set comprises at least one of: power information of a reference signal part measured based on a reference signal measurement set and power information of an interference noise part measured based on the reference signal measurement set, or identifier information of a spatial filter measured based on the reference signal measurement set; or the first measurement data set comprises at least one of: the power information of the reference signal part measured based on the reference signal measurement set and power information of the interference noise part measured based on an interference signal measurement set, the identifier information of the spatial filter measured based on the reference signal measurement set, or identifier information of the spatial filter measured based on the interference signal measurement set;
wherein the first prediction data set comprises at least one of: identifier information of K spatial filters predicted from a reference signal prediction set, identifier information of K spatial filters predicted from an interference signal prediction set, or predicted Layer1 Signal to Interference plus Noise Ratios (L1-SINRs) corresponding to K spatial filters; wherein K is a positive integer.

29. The device of claim 28, wherein
the reference signal measurement set comprises M Channel Measurement Resources (CMRs); and/or the interference signal measurement set comprises M Interference Measurement Resources (IMRs), or the interference signal measurement set comprises 2M IMRs; and/or
the reference signal prediction set comprises N CMRs; and/or the interference signal prediction set comprises N IMRs, or the interference signal prediction set comprises 2N IMRs;
wherein M and N are positive integers, and M < N.

30. The device of claim 29, wherein
there is a one-to-one association relationship between CMRs in the M CMRs and IMRs in the M IMRs; or
there is a one-to-two association relationship between the CMRs in the M CMRs and IMRs in the 2M IMRs.

31. The device of claim 29 or 30, wherein
the M CMRs comprise at least one of: a Non-Zero Power Channel State Information-Reference Signal (NZP CSI-RS) resource, or a Synchronization Signal Block (SSB) resource; and/or
the M IMRs comprise at least one of: the NZP CSI-RS resource, or a Channel State Information Interference Resource (CSI-IM); or the 2M IMRs comprise at least one of: the NZP CSI-RS resource, or the CSI-IM.

32. The device of claim 29, wherein
there is a one-to-one association relationship between CMRs in the N CMRs and IMRs in the N IMRs; or
there is a one-to-two association relationship between the CMRs in the N CMRs and IMRs in the 2N IMRs.

33. The device of claim 29 or 32, wherein
the N CMRs comprise at least one of: a Non-Zero Power Channel State Information-Reference Signal (NZP CSI-RS) resource, or a Synchronization Signal Block (SSB) resource; and/or
the N IMRs comprise at least one of: the NZP CSI-RS resource, or a Channel State Information Interference Resource (CSI-IM); or the 2N IMRs comprise at least one of: the NZP CSI-RS resource, or the CSI-IM.

34. The device of claim 30 or 32, wherein
a CMR and an IMR, which have an association relationship, have a same Quasi-co-located (QCL) type D assumption.

35. The device of any one of claims 29 to 34, wherein
4M = N, or 8M = N.

36. The device of any one of claims 28 to 35, wherein
the first measurement data set is measured by the first communication device, or the first measurement data set is measured by another device and reported to the first communication device.

37. The device of any one of claims 28 to 36, wherein before the first communication device performs prediction of a spatial filter in spatial domain based on the first network model, the communication device further comprises:
a communication unit, configured to send first capability information; wherein the first capability information is used to indicate that the first communication device supports prediction of a spatial filter in spatial domain based on an L1-SINR.

38. The device of claim 37, wherein
the first capability information further comprises at least one of:
a maximum number of reference signal resources comprised in the reference signal measurement set;
a maximum number of interference signal resources comprised in the interference signal measurement set;
whether a Non-Zero Power Channel State Information-Reference Signal (NZP CSI-RS) resource is supported as an Interference Measurement Resource (IMR);
a maximum number of NZP CSI-RS resources supported for measurement when the NZP CSI-RS resource is supported as the IMR;
whether a Channel State Information Interference Resource (CSI-IM) is supported as the IMR;
a maximum number of CSI-IMs supported for measurement when the CSI-IM is supported as the IMR;
whether power information of the reference signal part and power information of the interference noise part are supported to be measured based on the reference signal measurement set;
a maximum size of the reference signal prediction set;
a maximum size of the interference signal prediction set; or
a maximum value of K.

39. The device of any one of claims 28 to 38, wherein before the first communication device performs prediction of a spatial filter in spatial domain based on the first network model, the communication device further comprises:
a communication unit, configured to receive first information;
wherein the first information is used to configure at least one of: the reference signal measurement set, the interference signal measurement set, the reference signal prediction set, or the interference signal prediction set; or
the first information is used to activate at least one of: the reference signal measurement set of pre-configured plurality of reference signal measurement sets, the interference signal measurement set of pre-configured plurality of interference signal measurement sets, the reference signal prediction set of pre-configured plurality of reference signal prediction sets, or the interference signal prediction set of pre-configured plurality of interference signal prediction sets.

40. The device of any one of claims 28 to 39, further comprising:
a communication unit, configured to send first prediction information;
wherein the first prediction information comprises part or all of contents of the first prediction data set.

41. The device of claim 40, wherein
when the first prediction information comprises at least the predicted L1-SINRs corresponding to the K spatial filters, the L1-SINRs corresponding to the K spatial filters are represented in a differential manner.

42. The device of claim 40 or 41, wherein
the communication unit is further configured to receive first indicative information; wherein the first indicative information is used to indicate identifier information of a used spatial filter in identifier information of the predicted K spatial filters.

43. The device of claim 42, wherein
the first indicative information is at least one Transmission Configuration Indicator (TCI) state indicator; or
the first indicative information is at least one identifier field of a spatial filter.

44. The device of any one of claims 28 to 43, wherein
the first communication device is a terminal device.

45. The device of any one of claims 28 to 36, wherein before the first communication device performs prediction of a spatial filter in spatial domain based on the first network model, the communication device further comprises:
a communication unit, configured to receive second capability information; wherein the second capability information is used to indicate that a transmitting device of the second capability information supports prediction of a spatial filter in spatial domain based on an L1-SINR.

46. The device of claim 45, wherein
the second capability information further comprises at least one of:
a maximum number of reference signal resources comprised in the reference signal measurement set;
a maximum number of interference signal resources comprised in the interference signal measurement set;
whether a Non-Zero Power Channel State Information-Reference Signal (NZP CSI-RS) resource is supported as an Interference Measurement Resource (IMR);
a maximum number of NZP CSI-RS resources supported for measurement when the NZP CSI-RS resource is supported as the IMR;
whether a Channel State Information Interference Resource (CSI-IM) is supported as the IMR;
a maximum number of CSI-IMs supported for measurement when the CSI-IM is supported as the IMR; or
whether power information of the reference signal part and power information of the interference noise part are supported to be measured based on the reference signal measurement set.

47. The device of any one of claims 28 to 36 and 45 to 46, wherein before the first communication device performs prediction of a spatial filter in spatial domain based on the first network model, the communication device further comprises:
a communication unit, configured to send second information;
wherein the second information is used to configure at least one of: the reference signal measurement set, or the interference signal measurement set; or
the second information is used to activate at least one of: the reference signal measurement set of pre-configured plurality of reference signal measurement sets, or the interference signal measurement set of pre-configured plurality of interference signal measurement sets.

48. The device of any one of claims 28 to 36 and 45 to 47, wherein before the first communication device performs prediction of a spatial filter in spatial domain based on the first network model, the communication device further comprises:
a communication unit, configured to receive the first measurement data set.

49. The device of claim 48, wherein
power information of the reference signal part and/or power information of the interference noise part is represented in a differential manner.

50. The device of any one of claims 28 to 36 and 45 to 49, further comprising:
a communication unit, configured to send second indicative information; wherein the second indicative information is used to indicate identifier information of a used spatial filter in identifier information of the predicted K spatial filters.

51. The device of claim 50, wherein
the second indicative information is at least one Transmission Configuration Indicator (TCI) state indicator; or
the second indicative information is at least one identifier field of a spatial filter.

52. The device of any one of claims 28 to 36 and 45 to 51, wherein
the first communication device is a network device.

53. The device of any one of claims 28 to 52, wherein
the first network model is determined by the first communication device, or the first network model is configured or indicated by another device.

54. The device of any one of claims 28 to 53, wherein
the spatial filter comprises a transmit spatial filter; or
the spatial filter comprises a receive spatial filter; or
the spatial filter comprises a transmit spatial filter and a receive spatial filter.

55. A communication device comprising a processor and a memory, wherein the memory is configured to store a computer program, and the processor is configured to call and run the computer program stored in the memory for enabling the communication device to perform the method of any one of claims 1 to 27.

56. A chip, comprising a processor configured to call and run a computer program in a memory to enable a device having installed thereon the chip to perform the method of any one of claims 1 to 27.

57. A computer-readable storage medium configured to store a computer program that when executed, implements the method of any one of claims 1 to 27.

58. A computer program product comprising computer program instructions that when executed, implement the method of any one of claims 1 to 27.

59. A computer program, wherein when the computer program is executed, the method of any one of claims 1 to 27 is implemented.
